# EUROPEAN PATENT APPLICATION

(11) **EP 4 478 461 A1**
(43) Date of publication of application: **18.12.2024**
(21) Application number: 23752918.5
(22) Date of filing: 08.02.2023
(51) Int. Cl.: H01M 4/86, H01M 8/10, H01M 8/1004

(54) **MEMBRANE ELECTRODE ASSEMBLY AND SOLID POLYMER FUEL CELL**

(30) Priority: 10.02.2022 JP 2022019986; 08.03.2022 JP 2022035335
(71) Applicant: Toppan Holdings Inc., Tokyo 110-0016 (JP)
(72) Inventor: SUZUKI, Yutaka, Tokyo 110-0016 (JP); MORIOKA, Hiroyuki, Tokyo 110-0016 (JP); KISHI, Katsuyuki, Tokyo 110-0016 (JP)
(74) Representative: Hoffmann Eitle
(86) International application number: PCT/JP2023/004251
(87) International publication number: WO 2023/153454

(57) **Abstract**

A membrane electrode assembly 10 includes a polymer electrolyte membrane 11 that has a first surface 11c and a second surface 11a, an air electrode catalyst layer 12C that is joined to the first surface 11c, and a fuel electrode catalyst layer 12A that is joined to the second surface 11a. The mass ratio of a fibrous material in the fuel electrode catalyst layer 12A is higher than the mass ratio of a fibrous material in the air electrode catalyst layer 12C.

## Description

### [Technical Field]

The present invention relates to a membrane electrode assembly and a polymer electrolyte fuel cell.

### [Background Art]

### First background

A polymer electrolyte fuel cell includes a membrane electrode assembly including a polymer electrolyte membrane that is sandwiched between a pair of electrode catalyst layers. One of the electrode catalyst layers constitutes an air electrode that is a cathode, and the other electrode catalyst layer constitutes a fuel electrode that is an anode.

Fuel gas containing hydrogen is supplied to the fuel electrode, and oxidant gas containing oxygen is supplied to the air electrode. From the fuel gas supplied to the fuel electrode, protons and electrons are generated due to the effect of a catalyst contained in the electrode catalyst layer. The protons are conducted by a polymer electrolyte contained in the electrode catalyst layer and the polymer electrolyte membrane, and are transferred to the air electrode through the polymer electrolyte membrane. The electrons are extracted from the fuel electrode to an external circuit, and are transferred to the air electrode through the external circuit. In the air electrode, the oxidant gas reacts with the protons and electrons transferred from the fuel electrode to generate water. Such an electrode reaction proceeds to generate a current flow (see, for example, Patent Literatures 1 to 6).

### Second background

In recent years, fuel cells have attracted attention as an effective solution for environmental and energy issues. Fuel cells oxidize fuel such as hydrogen using an oxidant such as oxygen, and convert chemical energy generated by oxidation into electric energy.

Fuel cells are classified according to the type of electrolyte into alkaline fuel cells, phosphoric acid fuel cells, polymer fuel cells, molten carbonate fuel cells, solid oxide fuel cells, and the like. Polymer electrolyte fuel cells (PEFCs) achieve low temperature operation and high power density, and can be small in size and light in weight, and are thus expected to be applied to a portable power supply, a household power supply, or an in-vehicle power supply.

Polymer electrolyte fuel cells (PEFCs) have a structure in which a polymer electrolyte membrane as an electrolyte membrane is sandwiched between a fuel electrode (anode) and an air electrode (cathode), and supply fuel gas containing hydrogen to the fuel electrode side and supply oxidant gas containing oxygen to the air electrode side to generate power by the following electrochemical reactions.

Anode:

   H₂ → 2H⁺ + 2e⁻ ... (1)
Cathode:

   1/2 O₂ + 2H⁺ + 2e⁻ → H₂O ... (2)

Each of the anode and the cathode has a laminated structure of a catalyst layer and a gas diffusion layer. Fuel gas supplied to the anode-side electrode catalyst layer splits into protons and electrons due to the electrode catalyst (reaction 1). The protons pass through a polymer electrolyte in the anode-side electrode catalyst layer and the polymer electrolyte membrane, and are transferred to the cathode-side electrode catalyst layer. The electrons pass through an external circuit, and are transferred to the cathode-side electrode catalyst layer. In the cathode-side electrode catalyst layer, the protons, the electrons, and oxidant gas supplied from the outside react with each other to generate water (reaction 2). Thus, the electrons pass through the external circuit to generate power.

A fuel cell may be mounted, for example, as an in-vehicle power supply on an automobile. A fuel cell mounted on a vehicle is assumed to be used in various environments; thus, a membrane electrode assembly of the fuel cell preferably has high mechanical durability. Examples of techniques that allow the membrane electrode assembly to have higher mechanical durability include the technique described in Patent Literature 7.

Patent Literature 7 proposes a polymer electrolyte membrane that has high breaking strength and is less likely to be broken even in an environment in which wet swelling and drying shrinkage are repeated.

Furthermore, as described above, protons required for a fuel cell to react are transferred through a polymer electrolyte. At this time, water is required; thus, usually, fuel gas and oxidant gas are humidified and then supplied to a catalyst layer. Therefore, separately from the fuel cell, a humidifier needs to be installed as a device for generating water vapor gas and humidifying fuel gas and oxidant gas.

However, when a fuel cell is used for a moving object such as a vehicle, it may not be possible to secure a sufficient space to place a humidifier; thus, there have been demands for a fuel cell having high output performance under relatively low humidification conditions such as conditions at a relative humidity of 20% to 50%.

Patent Literature 8 proposes a fuel cell that includes a cathode-side electrode catalyst layer including a particulate conductive member, a fibrous conductive member, a proton conductive resin, and catalyst particles. In the cathode-side electrode catalyst layer, the mass ratio of the proton conductive resin to the particulate conductive member, the mass ratio of the fibrous conductive member to the particulate conductive member, and the EW value of the proton conductive resin are adjusted so that the fuel cell has high output even under low humidification conditions.

### [Citation List]

### [Patent Literature]

[PTL 1] JP 2006-120506 A
[PTL 2] JP 2006-332041 A
[PTL 3] JP 2007-87651 A
[PTL 4] JP 2007-80726 A
[PTL 5] JP 2006-252948 A
[PTL 6] JP 2007-141588 A
[PTL 7] WO 2018/061838 A
[PTL 8] WO 2020/022191 A

### [Summary of the Invention]

### [Technical Problem]

### First problem

Substances related to an electrode reaction flow through pores of the electrode catalyst layers. For example, fuel gas passes through the pores of the electrode catalyst layer of the fuel electrode, and reaches a reaction spot in the fuel electrode. Due to humidification of the membrane electrode assembly, water that contributes to proton conduction passes through the pores of the electrode catalyst layer, and reaches the polymer electrolyte membrane. Furthermore, oxidant gas passes through the pores of the electrode catalyst layer of the air electrode, and reaches a reaction sites in the air electrode. Water generated in the air electrode passes through the pores of the electrode catalyst layer of the air electrode, and is discharged from the air electrode.

When excessive water is retained in the electrode catalyst layers, the transfer of the substances related to an electrode reaction is hindered, causing lower power generation performance. In order to prevent the occurrence of flooding, which is a phenomenon in which such retained water hinders an electrode reaction, for example, Patent Literatures 1 to 4 propose various improvements such as adjustment of the pore size of the electrode catalyst layers.

On the other hand, in order to obtain suitable proton conduction, a polymer electrolyte membrane containing an appropriate amount of water is preferable. This leads to a demand for a membrane electrode assembly that prevents the occurrence of flooding described above during operation under high humidification conditions or in a high current range in which a large amount of water is generated and that prevents, under low humidification conditions, drying up in which a polymer electrolyte membrane has a low water content. For example, in Patent Literature 5, a humidity adjustment film is laminated on an electrode catalyst layer to prevent both flooding and drying up. In Patent Literature 6, grooves are provided on a surface of an electrode catalyst layer to prevent both flooding and drying up.

However, from the viewpoint of achieving, through improvement in the materials of electrode catalyst layers, a membrane electrode assembly that prevents both flooding and drying up and has good power generation performance under both low humidification conditions and high humidification conditions, there is still room for improvement in configuration of the membrane electrode assembly.

### Second problem

Another approach for achieving a membrane electrode assembly having higher mechanical durability may be implemented by using electrode catalyst layers having higher mechanical strength. Swelling and shrinkage of a membrane electrode assembly due to repetition of wet swelling and drying shrinkage causes breakage of a polymer electrolyte membrane, leading to a fuel cell having significantly lower output. In this case, when the membrane electrode assembly includes electrode catalyst layers having high mechanical strength, swelling and shrinkage are less likely to occur, and swelling and shrinkage of the polymer electrolyte membrane are less likely to occur. That is, it is possible to enable the entire membrane electrode assembly to have higher durability not only by using a polymer electrolyte membrane that is less likely to be broken even in an environment in which wet swelling and drying shrinkage are repeated during operation but also by using electrode catalyst layers having higher mechanical strength. Furthermore, in general, a polymer electrolyte membrane that is less likely to be broken has a large thickness; thus, a membrane electrode assembly including such a polymer electrolyte membrane has lower output. Therefore, a membrane electrode assembly preferably has high output and includes a polymer electrolyte membrane that is less likely to be broken. In order to achieve such a membrane electrode assembly, the entire membrane electrode assembly needs to have higher mechanical strength.

However, Patent Literature 7 has not sufficiently examined the mechanical strength of the electrode catalyst layers, and the durability of the membrane electrode assembly is insufficient.

Another approach for achieving higher output under low humidification conditions may be implemented by adjusting the ratios of fibrous materials contained in the cathode-side electrode catalyst layer and the anode-side electrode catalyst layer. For example, when the ratio of the fibrous material in the cathode-side electrode catalyst layer is higher than the ratio of the fibrous material in the anode-side electrode catalyst layer, the cathode-side electrode catalyst layer has a larger thickness, and this may cause lower proton conductivity in the thickness direction of the electrode catalyst layers and lead to insufficient protons required for an electrochemical reaction of the fuel cell, causing the membrane electrode assembly to have lower output.

On the other hand, when the ratio of the fibrous material in the cathode-side electrode catalyst layer is approximately the same as the ratio of the fibrous material in the anode-side electrode catalyst layer, the electrode catalyst layers may have lower mechanical strength, causing the membrane electrode assembly to have lower durability.

However, Patent Literature 8 has not sufficiently examined the material or ratio of fibrous members of the cathode-side electrode catalyst layer and the anode-side electrode catalyst layer, and the achievement of both the output and durability of the membrane electrode assembly is insufficient.

The present invention has been made in view of such circumstances, and an object of the present invention is to provide a membrane electrode assembly that is used for a polymer electrolyte fuel cell and that includes electrode catalyst layers having higher mechanical strength to allow the membrane electrode assembly to have higher durability and that has high output even under low humidification conditions.

### [Solution to Problem]

### First invention group A

[1] A membrane electrode assembly for solving the first problem includes a polymer electrolyte membrane that has a first surface, and a second surface that is a surface opposite to the first surface, an air electrode catalyst layer that is an electrode catalyst layer joined to the first surface and contains a first catalyst material, a first conductive carrier supporting the first catalyst material, a first electrolyte, and a first fibrous material, and a fuel electrode catalyst layer that is an electrode catalyst layer joined to the second surface and contains a second catalyst material, a second conductive carrier supporting the second catalyst material, a second electrolyte, and a second fibrous material, wherein a mass ratio of the second fibrous material in the fuel electrode catalyst layer is higher than a mass ratio of the first fibrous material in the air electrode catalyst layer.
   The above configuration allows the membrane electrode assembly to have sufficient drainage performance while preventing inhibition of water retentivity. As a result, under both high humidification conditions and low humidification conditions, the membrane electrode assembly has a suitable moisture state, achieving good power generation performance.
[2] In the configuration [1], the mass ratio of the second fibrous material in the fuel electrode catalyst layer may be 1.2 times or more and 9.0 times or less the mass ratio of the first fibrous material in the air electrode catalyst layer.
   The above configuration suitably provides the effect of allowing the membrane electrode assembly to have sufficient drainage performance while preventing inhibition of water retentivity. This achieves high power generation performance under both high humidification conditions and low humidification conditions.
[3] In the configuration [1] or [2], a mass of the first fibrous material contained in the air electrode catalyst layer may be 0.04 times or more and 1.0 times or less a mass of the first conductive carrier contained in the air electrode catalyst layer.
   The above configuration allows the air electrode catalyst layer to have a suitable amount of pores. Therefore, under high humidification conditions, generated water is more likely to be accurately discharged, and under low humidification conditions, higher water retentivity is more likely to be achieved.
[4] In any one of the configurations [1] to [3], a mass of the second fibrous material contained in the fuel electrode catalyst layer may be 0.5 times or more and 3.0 times or less a mass of the second conductive carrier contained in the fuel electrode catalyst layer.
   The above configuration allows the fuel electrode catalyst layer to have a suitable amount of pores. Therefore, under high humidification conditions, generated water is more likely to be accurately discharged, and under low humidification conditions, higher water retentivity is more likely to be achieved.
[5] In any one of the configurations [1] to [4], an average fiber diameter of at least one of the first fibrous material and the second fibrous material may be 10 nm or more and 400 nm or less.
   The above configuration allows the fibrous material to have suitable bending properties and linear properties; thus, pores are more likely to be formed in the electrode catalyst layer, and the fibrous material is more likely to be dispersed in a coating liquid for forming the electrode catalyst layer.
[6] In any one of the configurations [1] to [5], an average fiber length of at least one of the first fibrous material and the second fibrous material may be 0.7 µm or more and 30 µm or less.
   The above configuration allows the fibrous material to be entangled with suitable strength. Therefore, the electrode catalyst layer is more likely to have higher mechanical strength, and the fibrous material is more likely to be dispersed in a coating liquid for forming the electrode catalyst layer.
[7] In any one of the configurations [1] to [6], an average thickness of the fuel electrode catalyst layer may be larger than an average thickness of the air electrode catalyst layer.
   In the above configuration, water generated in the air electrode catalyst layer is more likely to flow through the polymer electrolyte membrane to the fuel electrode. This allows the membrane electrode assembly to have higher drainage performance.
[8] A polymer electrolyte fuel cell for solving the above problem includes the membrane electrode assembly of any one of [1] to [7], a pair of gas diffusion layers that sandwich the membrane electrode assembly, and a pair of separators that sandwich the membrane electrode assembly and the pair of gas diffusion layers.

The above configuration achieves good power generation performance under both high humidification conditions and low humidification conditions.

### Second invention group B

[9] In order to solve the second problem, a membrane electrode assembly according to an aspect of the present invention that is used for a polymer electrolyte fuel cell, the membrane electrode assembly includes a polymer electrolyte membrane that has a first surface, and a second surface that is a surface opposite to the first surface, a cathode-side electrode catalyst layer that contains a first catalyst, a first conductive carrier supporting the first catalyst, a first polymer electrolyte, a first fibrous material and is joined to the first surface, and an anode-side electrode catalyst layer that contains a second catalyst, a second conductive carrier supporting the second catalyst, a second polymer electrolyte, and a second fibrous material and is joined to the second surface. A ratio (F2/C2)/(F1/C1) is in a range of 1.5 or more and 50.0 or less, where F1/C1 represents a ratio of a mass F1 of the first fibrous material to a mass C1 of the first conductive carrier, and F2/C2 represents a ratio of a mass F2 of the second fibrous material to a mass C2 of the second conductive carrier. At least one of the first fibrous material and the second fibrous material contains a nitrogen atom.

[10] In [9], the ratio F1/C1 may be in a range of 0.05 or more and 0.25 or less.

[11] In [9] or [10], the ratio F2/C2 may be in a range of 0.7 or more and 3.0 or less.

[12] In any one of [9] to [11], an average fiber diameter of at least one of the first fibrous material and the second fibrous material may be in a range of 10 nm or more and 500 nm or less.

[13] In any one of [9] to [12], an average fiber length of at least one of the first fibrous material and the second fibrous material may be in a range of 0.7 µm or more and 40 µm or less.

[14] In any one of [9] to [13], a ratio (T2/T1) of an average thickness T2 of the anode-side electrode catalyst layer to an average thickness T1 of the cathode-side electrode catalyst layer may be 1.0 or more and 2.0 or less.

[15] In any one of [9] to [14], the nitrogen atom may form a Lewis basic group having an unshared electron pair.

[16] In any one of [9] to [15], at least one of the first fibrous material and the second fibrous material may have an azole structure.

[17] A membrane electrode assembly for a polymer electrolyte fuel cell according to an aspect of the present invention includes the membrane electrode assembly of any one of [9] to [16], a pair of gas diffusion layers that sandwich the membrane electrode assembly, and a pair of separators that face each other and sandwich the membrane electrode assembly and the pair of gas diffusion layers.

### [Advantageous Effects of the Invention]

The first invention group A achieves good power generation performance under both high humidification conditions and low humidification conditions.

The second invention group B provides a membrane electrode assembly that is used for a polymer electrolyte fuel cell and that includes catalyst layers having higher mechanical strength and that has high output even under low humidification conditions. More specifically, an aspect of the present invention achieves a membrane electrode assembly having higher mechanical strength, and thus provides a high durability and high output membrane electrode assembly that is used for a polymer electrolyte fuel cell and that maintains durability even in an operating environment with repeated wet swelling and drying shrinkage and that has high output even during operation under low humidification conditions.

### [Brief Description of the Drawings]

Fig. 1 is a diagram showing a cross-sectional structure of a membrane electrode assembly of an embodiment of a first invention group.
Fig. 2 is an exploded view of a perspective structure of a polymer electrolyte fuel cell of an embodiment of the first invention group.
Fig. 3 is a schematic cross-sectional view of a structure of a membrane electrode assembly of an embodiment of a second invention group.
Fig. 4 is a schematic diagram showing a structure of electrode catalyst layers of the membrane electrode assembly shown in Fig. 3.
Fig. 5 is an exploded perspective view of a structure of a polymer electrolyte fuel cell including the membrane electrode assembly shown in Fig. 3.

### [Description of the Embodiments]

### First embodiment

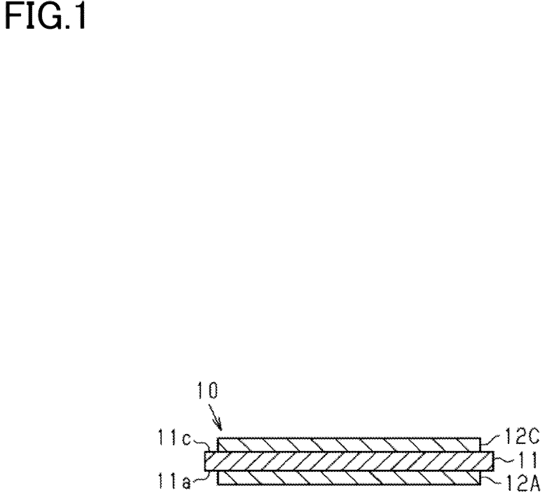

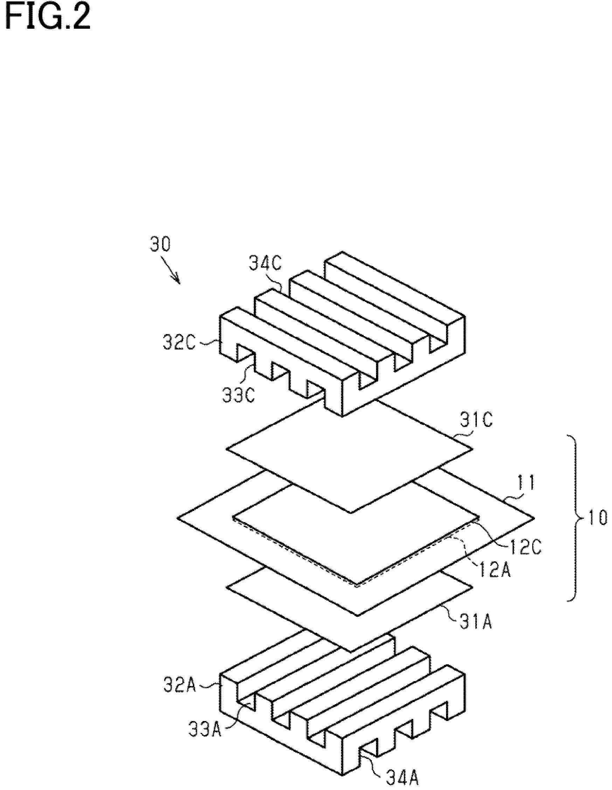

An embodiment of a membrane electrode assembly and a polymer electrolyte fuel cell will be described with reference to Figs. 1 and 2.

### [Membrane electrode assembly]

As shown in Fig. 1, a membrane electrode assembly 10 includes a polymer electrolyte membrane 11, and a pair of electrode catalyst layers. The pair of electrode catalyst layers are an air electrode catalyst layer 12C and a fuel electrode catalyst layer 12A. The air electrode catalyst layer 12C constitutes an air electrode that is a cathode of a polymer electrolyte fuel cell. The fuel electrode catalyst layer 12A constitutes a fuel electrode that is an anode of the polymer electrolyte fuel cell.

The polymer electrolyte membrane 11 has a first surface 11c, and a second surface 11a that is a surface opposite to the first surface 11c. The air electrode catalyst layer 12C is in contact with the first surface 11c, and the fuel electrode catalyst layer 12A is in contact with the second surface 11a. Thus, the polymer electrolyte membrane 11 is sandwiched between the air electrode catalyst layer 12C and the fuel electrode catalyst layer 12A.

As viewed perpendicular to the first surface 11c, the air electrode catalyst layer 12C and the fuel electrode catalyst layer 12A have substantially the same outer shape that is smaller than the outer shape of the polymer electrolyte membrane 11. The outer shape of the polymer electrolyte membrane 11 and the outer shapes of the catalyst layers 12C and 12A are not specifically limited, and may be, for example, a rectangular shape.

Materials of the layers constituting the membrane electrode assembly 10 will be described below.

The polymer electrolyte membrane 11 contains a polymer electrolyte. The polymer electrolyte contained in the polymer electrolyte membrane 11 may be a polymer electrolyte having proton conductivity, and may be, for example, a fluorine polymer electrolyte or a hydrocarbon polymer electrolyte. Examples of the fluorine polymer electrolyte include Nafion (registered trademark, manufactured by DuPont), Flemion (registered trademark, manufactured by Asahi Glass Co., Ltd.), Aciplex (registered trademark, manufactured by Asahi Kasei Corporation), and Gore-Select (registered trademark, manufactured by W. L. Gore & Associates G.K.). Examples of the hydrocarbon polymer electrolyte include sulfonated polyether ketone, sulfonated polyether sulfone, sulfonated polyether ether sulfone, sulfonated polysulfide, and sulfonated polyphenylene.

The air electrode catalyst layer 12C contains a first catalyst material, a first conductive carrier that is a carrier supporting the first catalyst material, a first electrolyte that is an aggregate of polymer electrolyte, and a first fibrous material.
The fuel electrode catalyst layer 12A contains a second catalyst material, a second conductive carrier that is a carrier supporting the second catalyst material, a second electrolyte that is an aggregate of polymer electrolyte, and a second fibrous material.

The first catalyst material and the second catalyst material are in a particulate form. From the viewpoint of achieving higher activity of the catalyst materials, the average particle size of the catalyst materials is preferably 20 nm or less, and more preferably 5 nm or less. From the viewpoint of achieving stable activity of the catalyst materials, the average particle size of the catalyst materials is preferably 0.5 nm or more, and more preferably 1 nm or more. The material of the catalyst materials may be, for example, a platinum group metal, a metal other than a platinum group metal, an alloy of these metals, an oxide of these metals, or a complex oxide of these metals. The platinum group metal is platinum, palladium, ruthenium, iridium, rhodium, or osmium. The metal other than a platinum group metal is iron, lead, copper, chromium, cobalt, nickel, manganese, vanadium, molybdenum, gallium, or aluminum. From the viewpoint of achieving higher activity of the catalyst materials, the material of the catalyst materials is preferably platinum or a platinum alloy.

The first conductive carrier and the second conductive carrier are particles that are not eroded by the catalyst materials, and have conductivity. An example of the conductive carriers is carbon particles. From the viewpoint of easy formation of an electron conduction path, the particle size of the conductive carriers is preferably 10 nm or more. From the viewpoint of achieving a lower resistance value of the catalyst layers 12C and 12A and supporting a larger amount of catalyst material, the particle size of the conductive carriers is preferably 1000 nm or less, and more preferably 100 nm or less.

Specific examples of the conductive carriers include carbon black, black lead, graphite, activated carbon, and fullerene. Carbon black is, for example, acetylene black, furnace black, or Ketjen black.

The conductive carriers may be covered with a hydrophobic coating. The hydrophobic coating imparts hydrophobicity to the conductive carriers, and has gas permeability that allows fuel gas and oxidant gas to pass through. From the viewpoint of achieving higher gas permeability, the thickness of the hydrophobic coating is preferably 40 nm or less. From the viewpoint of achieving higher water drainage performance of the catalyst layers 12C and 12A, the thickness of the hydrophobic coating is preferably 2 nm or more.

An example of the material of the hydrophobic coating is a fluorine compound having at least one polar group. The polar group is, for example, a hydroxyl group, an alkoxy group, a carboxyl group, an ester group, an ether group, a carbonate group, or an amide group. The hydrophobic coating having a polar group is more likely to be fixed to an outermost surface of the conductive carriers. An example of a portion of the fluorine compound other than the polar group is a fluoroalkyl backbone.

The first electrolyte and the second electrolyte have, for example, a particulate form, or a form in which a plurality of particles are combined. The first electrolyte and the second electrolyte may be a polymer electrolyte having proton conductivity, and are, for example, a fluoropolymer electrolyte or a hydrocarbon polymer electrolyte. Examples of the fluorine polymer electrolyte include Nafion (registered trademark, manufactured by DuPont), Flemion (registered trademark, manufactured by Asahi Glass Co., Ltd.), Aciplex (registered trademark, manufactured by Asahi Kasei Corporation), and Gore-Select (registered trademark, manufactured by W. L. Gore & Associates G.K.). Examples of the hydrocarbon polymer electrolyte include sulfonated polyether ketone, sulfonated polyether sulfone, sulfonated polyether ether sulfone, sulfonated polysulfide, and sulfonated polyphenylene.

When the first electrolyte and the polymer electrolyte constituting the polymer electrolyte membrane 11 are the same type of electrolyte, the air electrode catalyst layer 12C has higher adhesion to the polymer electrolyte membrane 11. When the second electrolyte and the polymer electrolyte constituting the polymer electrolyte membrane 11 are the same type of electrolyte, the fuel electrode catalyst layer 12A has higher adhesion to the polymer electrolyte membrane 11.

The first fibrous material and the second fibrous material are at least one of electron conducting fibers, proton conducting fibers, and ionomer adsorption fibers. Electron conducting fibers are fibers made of a material having electron conductivity, and are, for example, carbon fibers. Proton conducting fibers are fibers made of a polymer electrolyte having proton conductivity. Ionomer adsorption fibers are polymer fibers having at least one cation exchange group.

The first fibrous material contained in the air electrode catalyst layer 12C may be only one of electron conducting fibers, proton conducting fibers, and ionomer adsorption fibers, or may be two or more of these types of fibers. The second fibrous material contained in the fuel electrode catalyst layer 12A may be only one of electron conducting fibers, proton conducting fibers, and ionomer adsorption fibers, or may be two or more of these types of fibers.

The catalyst layers 12C and 12A containing a fibrous material have higher strength; thus, the catalyst layers 12C and 12A are easily formed, and cracking is less likely to occur in the catalyst layers 12C and 12A. This allows the membrane electrode assembly 10 to have higher durability.

Examples of the electron conducting fibers include carbon fibers, carbon nanotubes, carbon nanohorns, and conductive polymer nanofibers. From the viewpoint of achieving higher conductivity of the catalyst layers 12C and 12A and higher dispersibility of coating liquids for forming the catalyst layers 12C and 12A, the electron conducting fibers are preferably carbon nanofibers or carbon nanotubes.

The material of the proton conducting fibers is, for example, a fluorine polymer electrolyte or a hydrocarbon polymer electrolyte. Examples of the fluorine polymer electrolyte include Nafion (registered trademark, manufactured by DuPont), Flemion (registered trademark, manufactured by Asahi Glass Co., Ltd.), Aciplex (registered trademark, manufactured by Asahi Kasei Corporation), and Gore-Select (registered trademark, manufactured by W. L. Gore & Associates G.K.). Examples of the hydrocarbon polymer electrolyte include sulfonated polyether ketone, sulfonated polyether sulfone, sulfonated polyether ether sulfone, sulfonated polysulfide, and sulfonated polyphenylene.

When the polymer electrolytes constituting the polymer electrolyte membrane 11, the first electrolyte, and the first fibrous material are the same type of electrolyte, the air electrode catalyst layer 12C has higher adhesion to the polymer electrolyte membrane 11. When the polymer electrolytes constituting the polymer electrolyte membrane 11, the second electrolyte, and the second fibrous material are the same type of electrolyte, the fuel electrode catalyst layer 12A has higher adhesion to the polymer electrolyte membrane 11.

Ionomer adsorption fibers have a cation exchange group at the end of a polymer structure. The cation exchange group is, for example, a hydroxyl group, a carbonyl group, a sulfonic acid group, a phosphorous acid group, an amino group, or the like. Ionomer adsorption fibers have ionomer adsorption properties. The amount of ionomer adsorbed on ionomer adsorption fibers can be calculated by bringing the ionomer adsorption fibers into contact with a dispersion liquid in which an ionomer is dispersed at a predetermined concentration, and then filtering a liquid containing the dispersion liquid and the ionomer adsorption fibers, for example, using a filter having a pore size of 0.3 µm to 0.5 µm, and measuring the concentration of ionomer contained in the filtrate.

A mass ratio DF1 of the first fibrous material in the air electrode catalyst layer 12C is, in other words, the ratio of the total mass of the first fibrous material to the total mass of the material of the air electrode catalyst layer 12C. A mass ratio DF2 of the second fibrous material in the fuel electrode catalyst layer 12A is, in other words, the ratio of the total mass of the second fibrous material to the total mass of the material of the fuel electrode catalyst layer 12A.

The mass ratio DF2 of the second fibrous material is higher than the mass ratio DF1 of the first fibrous material. The mass ratio DF2 is preferably 1.2 times or more and 9.0 times or less the mass ratio DF1, and more preferably 1.4 times or more and 3.0 times or less the mass ratio DF1.

In general, in a polymer electrolyte fuel cell, an air electrode has lower reactivity than a fuel electrode; thus, the air electrode contains a larger amount of catalyst material than the fuel electrode. That is, a total mass P1 of the first catalyst material contained in the air electrode catalyst layer 12C is larger than a total mass P2 of the second catalyst material contained in the fuel electrode catalyst layer 12A. Thus, an electrode reaction is more likely to suitably proceed.

When the mass ratio DF2 of the second fibrous material in the fuel electrode is higher than the mass ratio DF1 of the first fibrous material in the air electrode, the mass ratio of the first catalyst material in the air electrode catalyst layer 12C is higher than the mass ratio of the second catalyst material in the fuel electrode catalyst layer 12A; thus, the air electrode is more likely to contain a larger amount of catalyst material.

Furthermore, a higher mass ratio of fibrous materials allows a larger amount of pores to be formed in the electrode catalyst layers. Due to a larger amount of pores in the fuel electrode catalyst layer 12A, water generated by an electrode reaction in the air electrode is not only discharged from the air electrode catalyst layer 12C toward the outside of the membrane electrode assembly 10 but also is more likely to flow through the polymer electrolyte membrane 11 to the fuel electrode catalyst layer 12A. This leads to higher drainage performance for water generated by an electrode reaction.

When the mass ratio DF2 of the second fibrous material is 1.2 or more and 9.0 or less the mass ratio DF1 of the first fibrous material, the membrane electrode assembly 10 has sufficient water drainage performance, and is prevented from having excessive drainage performance. As a result, under both high humidification conditions and low humidification conditions, the membrane electrode assembly 10 has a suitable water state, achieving high power generation performance.

When the mass ratio DF2 of the second fibrous material is 1.2 or more the mass ratio DF1 of the first fibrous material, and preferably 1.4 or more the mass ratio DF1, it is possible to secure a sufficient amount of fibrous material in the fuel electrode catalyst layer 12A; thus, the occurrence of cracking in the fuel electrode catalyst layer 12A is prevented, allowing the fuel electrode catalyst layer 12A to have higher durability. Furthermore, it is possible to prevent a situation in which an excessive amount of fibrous material in the air electrode catalyst layer 12C leads to larger overvoltage.

On the other hand, when the mass ratio DF2 of the second fibrous material is 9.0 times or less the mass ratio DF1 of the first fibrous material, and preferably 3.0 times or less the mass ratio DF1, it is possible to secure a sufficient amount of fibrous material in the air electrode catalyst layer 12C; thus, the occurrence of cracking in the air electrode catalyst layer 12C is prevented, allowing the air electrode catalyst layer 12C to have higher durability. Furthermore, it is possible to prevent a situation in which an excessive amount of fibrous material in the fuel electrode catalyst layer 12A leads to larger overvoltage.

A total mass F1 of the first fibrous material contained in the air electrode catalyst layer 12C is preferably 0.04 or more and 1.0 or less a total mass C1 of the first conductive carrier contained in the air electrode catalyst layer 12C, and more preferably 0.2 or more and 0.6 or less the total mass C1.

When the total mass F1 of the first fibrous material is 0.04 or more the total mass C1 of the first conductive carrier, and preferably 0.2 or more the total mass C1, the air electrode catalyst layer 12C has a sufficient amount of pores; thus, under high humidification conditions, generated water is more likely to be accurately discharged. This prevents inhibition of gas dispersion. Furthermore, when the total mass F1 of the first fibrous material is 1.0 times or less the total mass C1 of the first conductive carrier, and preferably 0.6 times or less the total mass C1, the air electrode catalyst layer 12C is prevented from having an excessive amount of pores; thus, under low humidification conditions, higher water retentivity is more likely to be achieved.

A total mass F2 of the second fibrous material contained in the fuel electrode catalyst layer 12A is preferably 0.5 or more and 3.0 or less a total mass C2 of the second conductive carrier contained in the fuel electrode catalyst layer 12A, and more preferably 1.0 or more and 1.5 or less the total mass C2.

When the total mass F2 of the second fibrous material is 0.5 or more the total mass C2 of the second conductive carrier, and preferably 1.0 or more the total mass C2, the fuel electrode catalyst layer 12A has a sufficient amount of pores; thus, under high humidification conditions, water generated in the air electrode is more likely to be discharged through the fuel electrode. This prevents inhibition of gas dispersion. Furthermore, when the total mass F2 of the second fibrous material is 3.0 times or less the total mass C2 of the second conductive carrier, and preferably 1.5 times or less the total mass C2, the fuel electrode catalyst layer 12A is prevented from having an excessive amount of pores; thus, under low humidification conditions, higher water retentivity is more likely to be achieved.

The average fiber diameter of at least one of the first fibrous material and the second fibrous material is preferably 10 nm or more and 400 nm or less.

When the average fiber diameter of the fibrous material is 10 nm or more, the fibrous material has lower bending properties; thus, pores are more likely to be formed in the electrode catalyst layer. Furthermore, when the average fiber diameter of the fibrous material is 400 nm or less, the fibrous material has lower linear properties; thus, the fibrous material is more likely to be dispersed in a coating liquid for forming the electrode catalyst layer.

The average fiber length of at least one of the first fibrous material and the second fibrous material is preferably 0.7 µm or more and 30 µm or less.

When the average fiber length of the fibrous material is 0.7 µm or more, the fibrous material is more strongly entangled; thus, the electrode catalyst layer is more likely to have higher mechanical strength. Furthermore, when the average fiber length of the fibrous material is 30 µm or less, the fibrous material is not excessively strongly entangled; thus, the fibrous material is more likely to be dispersed in a coating liquid for forming the electrode catalyst layer.

The average thickness of the fuel electrode catalyst layer 12A is preferably larger than the average thickness of the air electrode catalyst layer 12C. In such a case, water generated in the air electrode catalyst layer 12C is more likely to flow through the polymer electrolyte membrane 11 to the fuel electrode, thus allowing the membrane electrode assembly 10 to have higher drainage performance.

The average thicknesses of the catalyst layers 12C and 12A are calculated by measuring thicknesses in a cross section of the catalyst layers 12C and 12A using a scanning electron microscope (SEM). Specifically, the average thickness of each of the electrode catalyst layers is the average value of thicknesses measured at five or more measurement points in the cross section. The measurement points are set at an interval of 10 µm or more.

### [Polymer electrolyte fuel cell]

A configuration of a polymer electrolyte fuel cell including the membrane electrode assembly 10 described above will be described with reference to Fig. 2.

As shown in Fig. 2, a polymer electrolyte fuel cell 30 includes the membrane electrode assembly 10, a pair of gas diffusion layers 31C and 31A, and a pair of separators 32C and 32A. The membrane electrode assembly 10 is sandwiched between the gas diffusion layer 31C and the gas diffusion layer 31A, and the gas diffusion layer 31C is in contact with the air electrode catalyst layer 12C, and the gas diffusion layer 31A is in contact with the fuel electrode catalyst layer 12A.

The gas diffusion layers 31C and 31A have gas diffusion properties and conductivity. The gas diffusion layers 31C and 31A include, for example, a carbon substrate such as a carbon cloth, a carbon paper, or a carbon felt. Furthermore, the gas diffusion layers 31C and 31A may include a carbon substrate, and a microporous layer that is a layer made of a porous material. The material of the microporous layer may be, for example, a mixture of a fluororesin such as polytetrafluoroethylene (PTFE), perfluoroethylene-propene copolymer (FEP), or ethylene-tetrafluoroethylene copolymer resin (ETFE) and a carbon material such as carbon black particles, carbon fibers, or graphite.

The gas diffusion layer 31C constitutes an air electrode together with the air electrode catalyst layer 12C, and the gas diffusion layer 31A constitutes a fuel electrode together with the fuel electrode catalyst layer 12A.

A laminate of the membrane electrode assembly 10 and the gas diffusion layers 31C and 31A is sandwiched between the separator 32C and the separator 32A. The separators 32C and 32A have gas impermeability and conductivity. The material of the separators 32C and 32A may be, for example, a carbon material or a metal material.

The separator 32C faces the gas diffusion layer 31C, and the separator 32A faces the gas diffusion layer 31A. Gas flow paths 33C are provided on a surface of the separator 32C facing the gas diffusion layer 31C, and cooling water flow paths 34C are provided on a surface of the separator 32C facing away from the gas diffusion layer 31C. Similarly, gas flow paths 33A are provided on a surface of the separator 32A facing the gas diffusion layer 31A, and cooling water flow paths 34A are provided on a surface of the separator 32A facing away from the gas diffusion layer 31A.

When the polymer electrolyte fuel cell 30 is in use, oxidant gas such as oxygen flows through the gas flow paths 33C of the separator 32C, and fuel gas such as hydrogen flows through the gas flow paths 33A of the separator 32A. Furthermore, cooling water flows through the cooling water flow paths 34C of the separator 32C and the cooling water flow paths 34A of the separator 32A. When oxidant gas is supplied from the gas flow paths 33C to the air electrode and fuel gas is supplied from the gas flow paths 33A to the fuel electrode, an electrode reaction proceeds, and an electromotive force is generated between the fuel electrode and the air electrode. An organic fuel such as methanol may be supplied to the fuel electrode.

The polymer electrolyte fuel cell 30 may be used as a single cell shown in Fig. 2, or a plurality of polymer electrolyte fuel cells 30 laminated and connected in series may be used as a single fuel cell. The polymer electrolyte fuel cell 30 is installed in a gas supply device, a cooling device, or other associated devices to be usable.

In addition to the above members, the polymer electrolyte fuel cell 30 may include a member such as a gasket for preventing gas leakage. Furthermore, the gas diffusion layer 31C and the separator 32C may be an integrated structure, and the gas diffusion layer 31A and the separator 32A may be an integrated structure. Alternatively, the gas diffusion layers 31C and 31A may be members constituting the membrane electrode assembly 10. When the separators 32C and 32A or the catalyst layers 12C and 12A serve as the gas diffusion layers 31C and 31A, the polymer electrolyte fuel cell 30 may not necessarily include the gas diffusion layers 31C and 31A.

### [Method of producing membrane electrode assembly]

A method of producing the membrane electrode assembly 10 will be described.

The catalyst layers 12C and 12A are formed by applying, to a substrate, a coating liquid containing the material of the catalyst layer 12C and a coating liquid containing the material of the catalyst layer 12A to form coating films, and drying the coating films.

A solvent of the coating liquids does not erode the catalyst materials, the conductive carriers, the polymer electrolytes, or the fibrous materials, and causes the polymer electrolytes to be dissolved or to be dispersed as a fine gel. The solvent is, for example, alcohols, a ketone solvent, an ether solvent, or a polar solvent. Examples of the alcohols include methanol, ethanol, 1-propanol, 2-propanol, 1-butanol, 2-butanol, isobutyl alcohol, tert-butyl alcohol, and pentanol. Examples of the ketone solvent include acetone, methyl ethyl ketone, pentanone, methyl isobutyl ketone, heptanone, cyclohexanone, methylcyclohexanone, acetonyl acetone, and diisobutyl ketone. Examples of the ether solvent include tetrahydrofuran, dioxane, diethylene glycol dimethyl ether, anisole, methoxytoluene, and dibutyl ether. Examples of the polar solvent include dimethylformamide, dimethylacetamide, N-methylpyrrolidone, ethylene glycol, diethylene glycol, diacetone alcohol, and 1-methoxy-2-propanol. The solvent may contain water, which has high compatibility with polymer electrolytes.

When higher dispersibility of the conductive carriers supporting a catalyst material is required, the coating liquids preferably contain a dispersant. Examples of the dispersant include an anionic surfactant, a cationic surfactant, an amphoteric surfactant, and a nonionic surfactant. Furthermore, when higher dispersibility in the coating liquids is required, the production process of the coating liquids preferably involves dispersion treatment. Examples of the dispersion treatment include stirring using a ball mill or a roll mill, stirring using a shear mill, stirring using a wet mill, stirring by application of ultrasonic waves, and stirring using a homogenizer.

From the viewpoint of preventing the occurrence of cracking on the surfaces of the catalyst layers 12C and 12A, the solid content of the coating liquids is preferably 50 mass% or less. From the viewpoint of achieving a higher film forming rate of the catalyst layers 12C and 12A, the solid content of the coating liquids is preferably 1 mass% or more.

The substrate for forming the catalyst layers 12C and 12A may be, for example, a transfer substrate that is peeled off after transfer of the catalyst layers 12C and 12A to the polymer electrolyte membrane 11. The material of the transfer substrate may be, for example, fluororesin, or an organic polymer compound other than fluororesin. Examples of the fluororesin include ethylene-tetrafluoroethylene copolymer (ETFE), tetrafluoroethylene-hexafluoropropylene copolymer (FEP), tetrafluoro perfluoroalkyl vinyl ether copolymer (PFA), and polytetrafluoroethylene (PTFE). Examples of the organic polymer compound include polyimide, polyethylene terephthalate, polyamide, polysulfone, polyether sulfone, polyphenylene sulfide, polyether ether ketone, polyetherimide, polyarylate, and polyethylene naphthalate.

The substrate for forming the catalyst layers 12C and 12A may be the polymer electrolyte membrane 11, or may be the gas diffusion layers 31C and 31A.

The application method of applying the coating liquids to the substrate is not specifically limited. The application method may be, for example, doctor blading, dipping, screen printing, roll coating, or the like.

When the substrate for forming the catalyst layers 12C and 12A is a transfer substrate, after the catalyst layers 12C and 12A are joined to the polymer electrolyte membrane 11 by thermocompression bonding, the transfer substrate is peeled off from the catalyst layers 12C and 12A. When the substrate for forming the catalyst layers 12C and 12A is the gas diffusion layers 31C and 31A, the catalyst layer 12C supported by the gas diffusion layer 31C and the catalyst layer 12A supported by the gas diffusion layer 31A are joined to the polymer electrolyte membrane 11 by thermocompression bonding. When the substrate for forming the catalyst layers 12C and 12A is the polymer electrolyte membrane 11, the catalyst layers 12C and 12A are directly formed on the surfaces of the polymer electrolyte membrane 11.

### [Examples]

The membrane electrode assembly and the polymer electrolyte fuel cell described above will be described by way of specific examples and comparative examples.

### (Example A1)

### <Production of coating liquids for forming electrode catalyst layers>

The following catalyst material, conductive carrier, polymer electrolyte, and fibrous material were mixed in a solvent, followed by dispersion treatment using a planetary ball mill for 30 minutes, thereby producing coating liquids for forming electrode catalyst layers. The solvent of the coating liquids was a mixed solvent of ultrapure water and 1-propanol. The volume ratio between ultrapure water and 1-propanol in the mixed solvent was 1 : 1. The coating liquids were prepared so that the solid content of the coating liquids was 8 mass%.

· Catalyst material and conductive carrier: Platinum supporting carbon particles (TEC10E50E, manufactured by Tanaka Kikinzoku Kogyo K.K.)
· Fibrous material: Carbon fibers (average fiber diameter: 0.15 µm, average fiber length: 15 µm)
· Polymer electrolyte: Fluorine polymer electrolyte (Nafion (registered trademark) dispersion liquid, manufactured by Wako Pure Chemical Industries, Ltd.)

The combination ratio of materials in the coating liquid for an air electrode catalyst layer was set so that the mass of the polymer electrolyte was 0.80 and the mass of the fibrous material was 0.60, where the mass of the conductive carrier was 1. The combination ratio of materials in the coating liquid for a fuel electrode catalyst layer was set so that the mass of the polymer electrolyte was 1.0 and the mass of the fibrous material was 1.0, where the mass of the conductive carrier was 1. That is, a ratio (DF2/DF1) of the mass ratio DF2 of the second fibrous material in the fuel electrode catalyst layer to the mass ratio DF1 of the first fibrous material in the air electrode catalyst layer was 1.3. The volume per unit mass of the catalyst material was extremely small; thus, for the purpose of adjusting the amount of pores, the mass of the catalyst material may be ignored in the calculation of the mass ratio of the fibrous material.

### <Formation of electrode catalyst layers>

A polytetrafluoroethylene (PTFE) sheet was used as a transfer substrate. The coating liquids for forming the catalyst layers were applied to the transfer substrate by doctor blading, and the formed coating films were dried in an air atmosphere at 80°C. Thus, an air electrode catalyst layer and a fuel electrode catalyst layer were obtained.

In this case, in formation of the air electrode catalyst layer, the amount of applied coating liquid was adjusted so that the amount of supported platinum was 0.1 mg/cm². In formation of the fuel electrode catalyst layer, the amount of applied coating liquid was adjusted so that the amount of supported platinum was 0.03 mg/cm².

### <Production of membrane electrode assembly>

Each of the air electrode catalyst layer and the fuel electrode catalyst layer on the transfer substrate was punched into a 5 cm square. The air electrode catalyst layer was transferred from the transfer substrate to one surface of the polymer electrolyte membrane, and the fuel electrode catalyst layer was transferred from the transfer substrate to the other surface of the polymer electrolyte membrane. The electrode catalyst layers were transferred by hot pressing at a temperature of 130°C and a pressure of 5.0 × 10⁶ Pa. The polymer electrolyte membrane was a fluorine polymer electrolyte (Nafion (registered trademark) 211, manufactured by DuPont). The polymer electrolyte membrane had a thickness of 25 µm.

Thus, a membrane electrode assembly of Example A1 was obtained. Furthermore, a gas diffusion layer was prepared by applying a microporous layer to a carbon paper, and the gas diffusion layer was bonded to each of the air electrode catalyst layer and the fuel electrode catalyst layer.

### (Example A2)

A membrane electrode assembly of Example A2 was obtained using the same materials and process as in Example A1 except that the combination ratio of materials in the air electrode catalyst layer was changed.

In Example A2, the combination ratio of materials in the coating liquid for the air electrode catalyst layer was set so that the mass of the polymer electrolyte was 0.80 and the mass of the fibrous material was 0.30, where the mass of the conductive carrier was 1. That is, the ratio (DF2/DF1) of the mass ratio of the second fibrous material to the mass ratio of the first fibrous material was 2.3.

### (Example A3)

A membrane electrode assembly of Example A3 was obtained using the same materials and process as in Example A1 except that the combination ratios of materials in the air electrode catalyst layer and the fuel electrode catalyst layer were changed.

In Example A3, the combination ratio of materials in the coating liquid for the air electrode catalyst layer was set so that the mass of the polymer electrolyte was 0.80 and the mass of the fibrous material was 0.20, where the mass of the conductive carrier was 1. Furthermore, the combination ratio of materials in the coating liquid for the fuel electrode catalyst layer was set so that the mass of the polymer electrolyte was 1.0 and the mass of the fibrous material was 1.3, where the mass of the conductive carrier was 1. That is, the ratio (DF2/DF1) of the mass ratio of the second fibrous material to the mass ratio of the first fibrous material was 3.9.

### (Example A4)

A membrane electrode assembly of Example A4 was obtained using the same materials and process as in Example A1 except that the combination ratios of materials in the air electrode catalyst layer and the fuel electrode catalyst layer were changed.

In Example A4, the combination ratio of materials in the coating liquid for the air electrode catalyst layer was set so that the mass of the polymer electrolyte was 0.80 and the mass of the fibrous material was 0.10, where the mass of the conductive carrier was 1. Furthermore, the combination ratio of materials in the coating liquid for the fuel electrode catalyst layer was set so that the mass of the polymer electrolyte was 1.0 and the mass of the fibrous material was 1.5, where the mass of the conductive carrier was 1. That is, the ratio (DF2/DF1) of the mass ratio of the second fibrous material to the mass ratio of the first fibrous material was 8.1.

### (Example A5)

A membrane electrode assembly of Example A5 was obtained using the same materials and process as in Example A1 except that the combination ratios of materials in the air electrode catalyst layer and the fuel electrode catalyst layer were changed.

In Example A5, the combination ratio of materials in the coating liquid for the air electrode catalyst layer was set so that the mass of the polymer electrolyte was 0.80 and the mass of the fibrous material was 0.10, where the mass of the conductive carrier was 1. Furthermore, the combination ratio of materials in the coating liquid for the fuel electrode catalyst layer was set so that the mass of the polymer electrolyte was 1.0 and the mass of the fibrous material was 2.7, where the mass of the conductive carrier was 1. That is, the ratio (DF2/DF1) of the mass ratio of the second fibrous material to the mass ratio of the first fibrous material was 11.

### (Example A6)

A membrane electrode assembly of Example A6 was obtained using the same materials and process as in Example A1 except that the combination ratios of materials in the air electrode catalyst layer and the fuel electrode catalyst layer were changed.

In Example A6, the combination ratio of materials in the coating liquid for the air electrode catalyst layer was set so that the mass of the polymer electrolyte was 0.80 and the mass of the fibrous material was 0.050, where the mass of the conductive carrier was 1. Furthermore, the combination ratio of materials in the coating liquid for the fuel electrode catalyst layer was set so that the mass of the polymer electrolyte was 1.0 and the mass of the fibrous material was 1.5, where the mass of the conductive carrier was 1. That is, the ratio (DF2/DF1) of the mass ratio of the second fibrous material to the mass ratio of the first fibrous material was 16.

### (Comparative Example A1)

A membrane electrode assembly of Comparative Example A1 was obtained using the same materials and process as in Example A1 except that the combination ratios of materials in the air electrode catalyst layer and the fuel electrode catalyst layer were changed.

In Comparative Example A1, the combination ratio of materials in the coating liquid for the air electrode catalyst layer was set so that the mass of the polymer electrolyte was 0.80 and the mass of the fibrous material was 0.80, where the mass of the conductive carrier was 1. Furthermore, the combination ratio of materials in the coating liquid for the fuel electrode catalyst layer was set so that the mass of the polymer electrolyte was 1.0 and the mass of the fibrous material was 0.60, where the mass of the conductive carrier was 1. That is, the ratio (DF2/DF1) of the mass ratio of the second fibrous material to the mass ratio of the first fibrous material was 0.75.

### (Comparative Example A2)

A membrane electrode assembly of Comparative Example A2 was obtained using the same materials and process as in Example A1 except that the combination ratios of materials in the air electrode catalyst layer and the fuel electrode catalyst layer were changed.

In Comparative Example A2, the combination ratio of materials in the coating liquid for the air electrode catalyst layer was set so that the mass of the polymer electrolyte was 0.80 and the mass of the fibrous material was 0.40, where the mass of the conductive carrier was 1. Furthermore, the combination ratio of materials in the coating liquid for the fuel electrode catalyst layer was set so that the mass of the polymer electrolyte was 1.0 and the mass of the fibrous material was 0.4, where the mass of the conductive carrier was 1. That is, the ratio (DF2/DF1) of the mass ratio of the second fibrous material to the mass ratio of the first fibrous material was 0.92.

### (Method of evaluating power generation performance)

For each of the examples and the comparative examples, the membrane electrode assembly in which the gas diffusion layers were laminated was placed in a power generation evaluation cell to form a polymer electrolyte fuel cell, followed by current-voltage measurement under two operating conditions different in humidification state using a fuel cell measurement device. The conditions for the current-voltage measurement and the operating conditions are as below.

### <Measurement conditions>

· Oxidant gas: Air
· Fuel gas: Hydrogen
· Cell temperature: 80°C
· Control back pressure: 150 kPa

### <Operating conditions 1>

· Relative humidity of air electrode: 90% RH
· Relative humidity of fuel electrode: 90% RH

### <Operating conditions 2>

· Relative humidity of air electrode: 40% RH
· Relative humidity of fuel electrode: 90% RH

The gas flow rate was controlled so that the fuel utilization ratio was constant in each of the operating conditions 1 with high humidification operation and the operating conditions 2 with low humidification operation.

### (Evaluation results)

Table 1 shows, for each of the examples and the comparative examples, the mass ratio DF1 (mass%) of the first fibrous material, the ratio of the total mass F1 of the first fibrous material to the total mass C1 of the first conductive carrier, the mass ratio DF2 (mass%) of the second fibrous material, the ratio of the total mass F2 of the second fibrous material to the total mass C2 of the second conductive carrier, the ratio of the mass ratio of the second fibrous material to the mass ratio of the first fibrous material, and the results of evaluation of power generation performance. In the evaluation of power generation performance, a fuel cell in which the voltage at a current density of 1.5 A/cm² was 0.65 V or more was rated as "Good", a fuel cell in which the voltage at a current density of 1.5 A/cm² was 0.50 V or more and less than 0.65 V was rated as "Fair", and a fuel cell in which the voltage at a current density of 1.5 A/cm² was less than 0.50 V was rated as "Poor".

**[Table 1]**

| | First fibrous material (air electrode catalyst layer) | | Second fibrous material (fuel electrode catalyst layer) | | Ratio between mass% of fibrous materials (DF2/DF1) | Power generation performance | |
|---|---|---|---|---|---|---|---|
| | Mass% (DF1) | Mass ratio relative to first conductive carrier (F1/C1) | Mass% (DF2) | Mass ratio relative to second conductive carrier (F2/C2) | | Operating conditions 1 | Operating conditions 2 |
| Ex. A1 | 25 | 0.60 | 33 | 1.0 | 1.3 | Good | Good |
| Ex. A2 | 14 | 0.30 | 33 | 1.0 | 2.3 | Good | Good |
| Ex. A3 | 10 | 0.20 | 39 | 1.3 | 3.9 | Good | Good |
| Ex. A4 | 5.3 | 0.10 | 43 | 1.5 | 8.1 | Good | Good |
| Ex. A5 | 5.3 | 0.10 | 57 | 2.7 | 11 | Good | Fair |
| Ex. A6 | 2.7 | 0.050 | 43 | 1.5 | 16 | Fair | Good |
| Comp. Ex. A1 | 31 | 0.80 | 23 | 0.60 | 0.75 | Poor | Poor |
| Comp. Ex. A2 | 18 | 0.40 | 17 | 0.40 | 0.92 | Poor | Good |

As shown in Table 1, in Examples A1 to A4 in which the mass ratio DF2 of the second fibrous material was 1.2 times or more and 9.0 times or less the mass ratio DF1 of the first fibrous material, good power generation performance was obtained under both the operating conditions 1 having high humidification conditions and the operating conditions 2 having low humidification conditions.

On the other hand, in Comparative Example A1 in which the mass ratio DF2 of the second fibrous material was apparently lower than the mass ratio DF1 of the first fibrous material, the power generation performance was poor under both high humidification conditions and low humidification conditions. In Comparative Example A1, due to the inappropriate ratios of materials in the electrode catalyst layers of the air electrode and the fuel electrode, in the membrane electrode assembly, lack of proper implementation of drainage and water retention functions and catalysis presumably hindered an electrode reaction from proceeding.

In Comparative Example A2 in which the mass ratio DF2 of the second fibrous material was slightly lower than the mass ratio DF1 of the first fibrous material, good power generation performance was obtained under low humidification conditions; however, under high humidification conditions, the power generation performance was poor. This suggests that in Comparative Example A2, having a small amount of pores in the fuel electrode catalyst layer caused insufficient drainage under high humidification conditions, and this led to inhibition of gas dispersion, resulting in lower performance.

In Example A5 in which the mass ratio DF2 of the second fibrous material exceeded 9 times the mass ratio DF1 of the first fibrous material, good power generation performance was obtained under high humidification conditions. On the other hand, the power generation performance under low humidification conditions was higher than in Comparative Examples A1 and A2, but lower than in Examples A1 to A4. This suggests that in Example A5, as compared with Examples A1 to A4, having an excessive amount of pores in the fuel electrode catalyst layer caused insufficient water retention under low humidification conditions, and this led to inhibition of proton conduction, resulting in lower performance.

In Example A6 in which the ratio between the mass ratio DF2 of the second fibrous material and the mass ratio DF1 of the first fibrous material was particularly high, good power generation performance was obtained under low humidification conditions. On the other hand, the power generation performance under high humidification conditions was higher than in Comparative Examples A1 and A2, but lower than in Examples A1 to A4. In Example A6, as compared with Examples A1 to A4, the amount of pores in the air electrode catalyst layer was excessively smaller than the amount of pores in the fuel electrode catalyst layer, and this presumably hindered drainage from proceeding.

As described by way of examples, the membrane electrode assembly and the polymer electrolyte fuel cell of the above embodiment provide the following effects.
(1) The mass ratio DF2 of the second fibrous material is higher than the mass ratio DF1 of the first fibrous material; thus, it is possible to allow the membrane electrode assembly 10 to have sufficient drainage performance while preventing inhibition of water retentivity. As a result, under both high humidification conditions and low humidification conditions, the membrane electrode assembly 10 has a suitable water state, achieving high power generation performance. In particular, when the mass ratio DF2 of the second fibrous material is 1.2 times or more and 9.0 times or less the mass ratio DF1 of the first fibrous material, the above effect is suitably obtained.
(2) The mass F1 of the first fibrous material is 0.04 times or more and 1.0 time or less the mass C1 of the first conductive carrier; thus, the air electrode catalyst layer 12C has a suitable amount of pores. Therefore, under high humidification conditions, generated water is more likely to be accurately discharged, and under low humidification conditions, higher water retentivity is more likely to be achieved.
(3) The mass F2 of the second fibrous material is 0.5 times or more and 3.0 times or less the mass C2 of the second conductive carrier; thus, the fuel electrode catalyst layer 12A has a suitable amount of pores. Therefore, under high humidification conditions, generated water is more likely to be accurately discharged, and under low humidification conditions, higher water retentivity is more likely to be achieved.
(4) The average fiber diameter of the fibrous material is 10 nm or more and 400 nm or less; thus, the fibrous material has suitable bending properties and linear properties. Therefore, pores are more likely to be formed in the electrode catalyst layer, and the fibrous material is more likely to be dispersed in a coating liquid for forming the electrode catalyst layer.
(5) The average fiber length of the fibrous material is 0.7 µm or more and 30 µm or less; thus, the fibrous material is entangled with suitable strength. Therefore, the electrode catalyst layer is more likely to have higher mechanical strength, and the fibrous material is more likely to be dispersed in a coating liquid for forming the electrode catalyst layer.
(6) The average thickness of the fuel electrode catalyst layer 12A is larger than the average thickness of the air electrode catalyst layer 12C; thus, water generated in the air electrode catalyst layer 12C is more likely to flow through the polymer electrolyte membrane 11 to the fuel electrode. This allows the membrane electrode assembly 10 to have higher drainage performance.

### Second embodiment

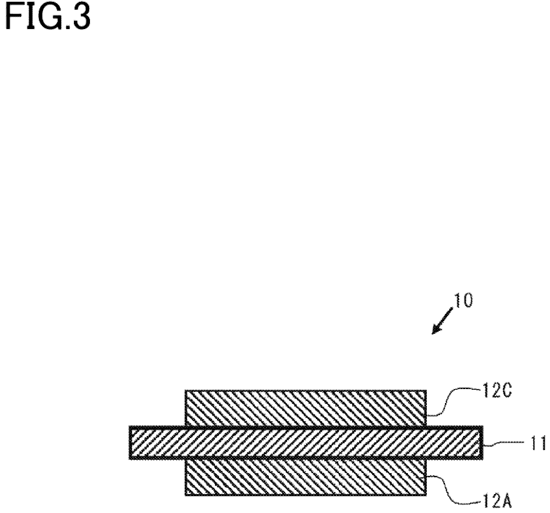

An embodiment of electrode catalyst layers, a membrane electrode assembly, and a polymer electrolyte fuel cell will be described with reference to Figs. 3 to 5.

### [Membrane electrode assembly]

A membrane electrode assembly will be described with reference to Fig. 3.

As shown in Fig. 3, the membrane electrode assembly 10 includes the polymer electrolyte membrane 11, a cathode-side electrode catalyst layer 12C, and an anode-side electrode catalyst layer 12A. The polymer electrolyte membrane 11 is made of a solid polymer.

The polymer electrolyte membrane 11 is made of, for example, a polymer material having proton conductivity. The polymer material having proton conductivity may be, for example, fluororesin, a hydrocarbon resin, or the like. The fluororesin may be, for example, Nafion (manufactured by DuPont, registered trademark), Flemion (manufactured by AGC Inc., registered trademark), Gore-Select (manufactured by Gore, registered trademark), or the like. The hydrocarbon resin may be, for example, engineering plastic, engineering plastic into which a sulfonic acid group is introduced, or the like.

### [Electrode catalyst layers]

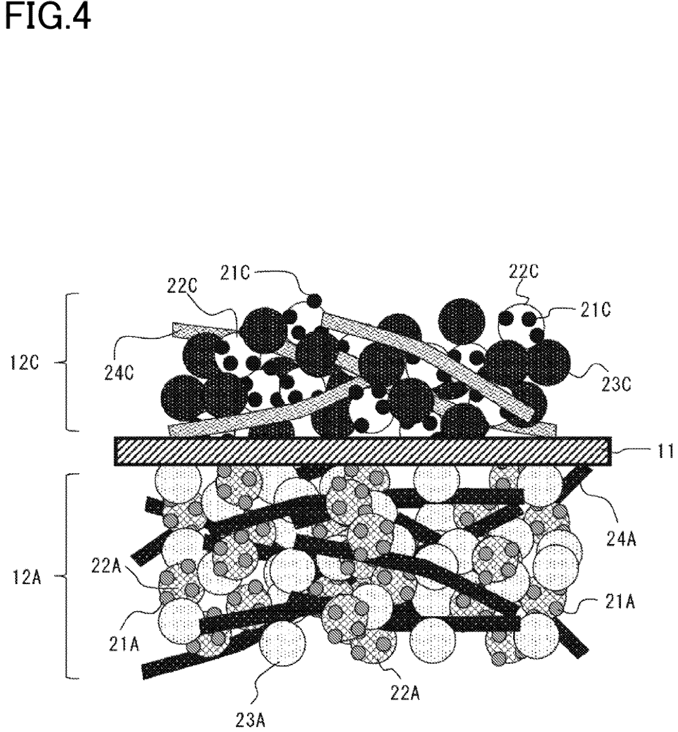

Electrode catalyst layers will be described with reference to Fig. 4.

Fig. 4 schematically shows the cathode-side electrode catalyst layer 12C and the anode-side electrode catalyst layer 12A.

As shown in Fig. 4, the cathode-side electrode catalyst layer 12C contains a first catalyst 21C, and the anode-side electrode catalyst layer 12A includes a second catalyst 21A. The first catalyst 21C may be the same as the second catalyst 21A. A pair of first catalyst 21C and second catalyst 21A are simply referred to as "catalysts 21"

The catalysts 21 may be made of an alloy containing platinum, an oxide of platinum, a complex oxide containing platinum, or the like. The alloy containing platinum can contain, for example, a platinum group metal other than platinum. The platinum group metals are palladium (Pd), ruthenium (Ru), iridium (Ir), rhodium (Rh), and osmium (Os). The alloy containing platinum can contain, for example, iron (Fe), lead (Pt), copper (Cu), chromium (Cr), cobalt (Co), nickel (Ni), manganese (Mn), vanadium (V), molybdenum (Mo), gallium (Ga), aluminum (Al), or the like. A catalyst made of an alloy containing platinum is preferable in that metal contained in the platinum catalysts 21 is less likely to be eluted in a redox reaction and preferable in terms of low overvoltage in a redox reaction. The second catalyst 21A more preferably contains an alloy made of platinum and ruthenium or platinum and cobalt. The use of these metals can prevent lower activity of the catalysts due to carbon monoxide that may be contained in fuel gas.

The particle size of the catalysts 21 is preferably in the range of 0.5 nm or more and 20 nm or less, and more preferably in the range of 1 nm or more and 5 nm or less. When the particle size of the catalysts 21 is 0.5 nm or more, the catalysts 21 are less likely to have lower stability. When the particle size of the catalysts 21 is 20 nm or less, the catalysts 21 are less likely to have lower activity.

The cathode-side electrode catalyst layer 12C contains a first conductive carrier 22C, a first polymer electrolyte 23C, and a first fibrous material 24C, in addition to the first catalyst 21C. On the other hand, the anode-side electrode catalyst layer 12A contains a second conductive carrier 22A, a second polymer electrolyte 23A, and a second fibrous material 24A, in addition to the second catalyst 21A. The first conductive carrier 22C may be the same as the second conductive carrier 22A, the first polymer electrolyte 23C may be the same as the second polymer electrolyte 23A, and the first fibrous material 24C may be the same as the second fibrous material 24A. A pair of first conductive carrier 22C and second conductive carrier 22A are simply referred to as "conductive carriers 22", a pair of first polymer electrolyte 23C and second polymer electrolyte 23A are simply referred to as "polymer electrolytes 23", and a pair of first fibrous material 24C and second fibrous material 24A are simply referred to as "fibrous materials 24".

The conductive carriers 22 support the catalysts 21. The conductive carriers 22 may be, for example, carbon particles, carbon fibers, a metal oxide, or the like. Of these, the metal oxide may be, for example, tin oxide. The tin oxide may be doped with tungsten or niobium. This allows the carriers to have high conductivity. The carriers are particularly preferably carbon particles. When carbon particles are selected as a carrier, the carrier can have a larger surface area as compared with the case where other materials are selected as a carrier; thus, the carrier can support the catalysts 21 at high density. This achieves higher catalytic activity for each of the conductive carriers 22. The conductive carriers 22 may be a carrier other than the carbon particles, carbon fibers, or metal oxide described above. In such a case, the conductive carriers 22 may be fine particles that have conductivity and are unaffected by the catalysts 21.

The average particle size of the conductive carriers 22 is preferably in the range of 10 nm or more and 3 µm or less, and more preferably in the range of 10 nm or more and 2 µm or less. When the particle size of the conductive carriers 22 is 10 nm or more, the conductive carriers 22 are prevented from being excessively small, thus preventing a situation in which an electron conduction path is less likely to be formed. Furthermore, when the particle size of the conductive carriers 22 is 3 µm or less, the conductive carriers 22 are prevented from being excessively large, thus preventing the electrode catalyst layers from having a large thickness. This prevents the electrode catalyst layers from having higher resistance, thus preventing reduction in the output characteristics of the fuel cell including the electrode catalyst layers.

The specific surface area of the conductive carriers 22 is preferably in the range of 50 m²/g or more and 2000 m²/g or less, and more preferably in the range of 100 m²/g or more and 1500 m²/g or less. When the specific surface area of the conductive carriers 22 is 50 m²/g or more, the catalysts 21 are supported in high density, thus allowing the catalysts 21 to have high activity. Furthermore, when the specific surface area of the conductive carriers 22 is 2000 m²/g or less, the conductive carriers 22 can have a smaller amount of micropores, thus achieving higher gas diffusion properties in the conductive carriers 22. This prevents the electrode catalyst layers from having higher mass transfer resistance, thus preventing a fuel cell including the electrode catalyst layers from having lower output characteristics.

When the conductive carriers 22 are made of carbon, the graphitization degree of the conductive carriers 22 is preferably in the range of 20% or more and 80% or less. If the graphitization degree of the conductive carriers 22 is 20% or less, the conductive carriers 22 may be lost by operating and stopping the fuel cell, thus causing the fuel cell to have lower output characteristics. On the other hand, if the graphitization degree of the conductive carriers 22 is 80% or more, due to unstable support of the catalysts 21, the continuous use of the fuel cell may cause the catalysts 21 to have a larger particle size and lower activity, thus causing the fuel cell to have lower output.

The polymer electrolytes 23 may be, for example, polymer materials having proton conductivity. The polymer material having proton conductivity may be, for example, fluororesin, a hydrocarbon resin, or the like. The fluororesin may be, for example, Nafion (manufactured by DuPont, registered trademark) or the like. The hydrocarbon resin may be, for example, an engineering plastic, a resin obtained by introducing a sulfonic acid group into a copolymer of engineering plastic, or the like.

In the polymer electrolytes 23, the dry mass value per mol of proton donor group (equivalent weight: EW) is preferably in the range of 400 or more and 1200 or less, and more preferably in the range of 600 or more and 1000 or less. When the equivalent weight EW is 400 or more, lower power generation performance due to flooding is prevented. When the equivalent weight EW is 1200 or less, lower proton conductivity is prevented, thus preventing a fuel cell including the electrode catalyst layers from having lower power generation performance.

In the cathode-side electrode catalyst layer 12C, the ratio of the mass of the first polymer electrolyte 23C to the mass of the first conductive carrier 22C (mass ratio I1/C1: mass (I1) of first polymer electrolyte/mass (C1) of first conductive carrier) is preferably in the range of 0.4 or more and 1.8 or less, and more preferably in the range of 0.5 or more and 1.3 or less. When the mass ratio I1/C1 is 0.4 or more, lower proton conductivity is prevented, thus preventing lower power generation performance. On the other hand, when the mass ratio I1/C1 is 1.8 or less, flooding is prevented, thus preventing lower power generation performance and lower durability of the cathode-side electrode catalyst layer 12C.

In the anode-side electrode catalyst layer 12A, the ratio of the mass of the second polymer electrolyte 23A to the mass of the second conductive carrier 22A (mass ratio I2/C2: mass (I2) of second polymer electrolyte/mass (C2) of second conductive carrier) is preferably in the range of 0.5 or more and 1.5 or less, and more preferably in the range of 0.7 or more and 1.2 or less. When the mass ratio I2/C2 is 0.5 or more, lower proton conductivity is prevented, thus preventing lower power generation performance. On the other hand, when the mass ratio I2/C2 is 1.5 or less, flooding is prevented, thus preventing lower power generation performance and lower durability of the anode-side electrode catalyst layer 12A.

The fibrous materials 24 may be, for example, oxide fibers, carbon fibers, carbon nanotubes, high molecular-weight polymer fibers, or the like. Examples of the high molecular-weight polymer fibers include nanofibers of polybenzimidazole, polyetherimide, and the like. The fibrous materials 24 are preferably carbon fibers or high molecular-weight polymer fibers. The fibrous materials 24 may be a material unaffected by the catalysts 21 and polymer electrolytes 23. Due to the fibrous materials 24, cracking is less likely to occur in the electrode catalyst layers; thus, the electrode catalyst layers have high durability.

At least one of the first fibrous material 24C on the cathode side and the second fibrous material 24A on the anode side contains a nitrogen atom. Examples of the material containing a nitrogen atom are high molecular-weight polymer fibers containing a nitrogen atom. The nitrogen atom of the fibrous materials 24 preferably forms a Lewis basic group having an unshared electron pair.

Specifically, the fibrous materials 24 containing a nitrogen atom preferably have an azole structure. The azole structure is a complex five-membered ring structure containing one or more nitrogen atoms, and may be, for example, an imidazole structure or an oxazole structure. The material containing a nitrogen atom preferably has a benzazole structure such as a benzimidazole structure or a benzoxazole structure. Specific examples of the material containing a nitrogen atom include a polymer of polybenzimidazole, polybenzoxazole, or the like.

The fibrous materials 24 having a nitrogen atom allow interaction between the unshared electron pair of the nitrogen atom and protons of the polymer electrolytes. This enables higher proton conductivity in the membrane electrode assembly 10, achieving higher output characteristics.

At least one or both of the first fibrous material 24C of the cathode-side electrode catalyst layer 12C and the second fibrous material 24A of the anode-side electrode catalyst layer 12A may have a nitrogen atom. At least the first fibrous material 24C on the cathode side preferably contains a nitrogen atom.

The average fiber diameter of the fibrous materials 24 is preferably in the range of 10 nm or more and 500 nm or less, and more preferably in the range of 10 nm or more and 300 nm or less. When the fiber diameter is in this range, the catalysts can be close to the fibrous materials 24 in the electrode catalyst layers, allowing a fuel cell including the electrode catalyst layers to have higher output.

The average fiber length of the fibrous materials 24 is preferably in the range of 0.7 µm or more and 40 µm or less, and more preferably in the range of 2 µm or more and 30 µm or less. When the fiber length is in this range, the electrode catalyst layers can have higher strength, and this prevents the occurrence of cracking, thus enabling the electrode catalyst layers to have higher durability against physical impact. Furthermore, a larger number of holes can be formed in the electrode catalyst layers, thus allowing the fuel cell to have higher output.

A ratio {(F2/C2)/(F1/C1)} of a ratio (F2/C2) between the mass (C2) of the second conductive carrier and the mass (F2) of the second fibrous material to a ratio (F1/C1) between the mass (C1) of the first conductive carrier and the mass (F1) of the first fibrous material is preferably in the range of 1.5 or more and 50.0 or less.

The mass C1 of the first conductive carrier and the mass C2 of the second conductive carrier do not include the mass of the catalysts supported by the first conductive carrier and the second conductive carrier.

If the ratio (F2/C2)/(F1/C1) is less than 1.5 times, the anode-side electrode catalyst layer 12A has a smaller thickness or smaller holes in the electrode catalyst layer than the cathode-side electrode catalyst layer 12C, and this causes the volume of water that can be held by the anode-side electrode catalyst layer 12A to be smaller. In this case, water generated in the cathode-side electrode catalyst layer 12C is less likely to be diffused in the anode-side electrode catalyst layer 12A, and flooding may cause the cathode-side electrode catalyst layer 12C to have higher gas diffusion resistance. This may cause reduction in the fuel cell output.

On the other hand, if the ratio (F2/C2)/(F1/C1) is more than 50.0 times, the anode-side electrode catalyst layer 12A has an excessively large thickness, and this causes the anode-side electrode catalyst layer 12A to have lower proton conductivity, leading to insufficient protons required for a cell chemical reaction in the cathode-side electrode catalyst layer 12C. This may cause reduction in the fuel cell output. Furthermore, as described later, the thicknesses of the electrode catalyst layers can be adjusted by pressing or the like. When the electrode catalyst layers are pressed to cause the electrode catalyst layers to have smaller thicknesses, the electrode catalyst layers have higher densities. This may lead to lower mass transfer properties of the electrode catalyst layers, causing the fuel cell to have lower output.

In the cathode-side electrode catalyst layer 12C, the ratio of the mass of the first fibrous material 24C to the mass of the first conductive carrier 22C (mass ratio F1/C1: mass (F1) of first fibrous material/mass (C1) of first conductive carrier) is preferably in the range of 0.05 or more and 0.25 or less. When the mass ratio F1/C1 is 0.05 or more, holes are generated in the cathode-side electrode catalyst layer 12C. This prevents flooding, thus preventing lower output of the fuel cell and lower durability of the cathode-side electrode catalyst layer 12C. On the other hand, when the mass ratio F1/C1 is 0.25 or less, the cathode-side electrode catalyst layer 12C does not have an excessively large thickness and is prevented from having lower proton conductivity, thus preventing lower output. When the cathode-side electrode catalyst layer 12C is pressed to cause the cathode-side electrode catalyst layer 12C to have a smaller thickness, the cathode-side electrode catalyst layer has a higher density, and this may lead to lower mass transfer properties of the cathode-side electrode catalyst layer, causing the fuel cell to have lower output.

The first fibrous material 24C is preferably carbon fibers or high molecular-weight polymer fibers. In particular, the carbon fibers are more preferably carbon fibers whose surface is hydrophilized. Due to the hydrophilized surface of the carbon fibers, water in the cathode-side electrode catalyst layer 12C is more likely to be uniformly distributed; thus, protons are more likely to be conducted via a network of water. This allows the fuel cell to have higher output.

When the fibrous materials 24 are high molecular-weight polymer fibers containing a nitrogen atom, the polymer electrolyte 23 is more likely to be adsorbed on surfaces of the fibrous materials 24; thus, protons are more likely to be conducted on the surfaces of the fibrous materials 24. This may allow the fuel cell to have higher output.

In the anode-side electrode catalyst layer 12A, the ratio of the mass of the second fibrous material 24A to the mass of the second conductive carrier 22A (mass ratio F2/C2: mass (F2) of second fibrous material/mass (C2) of second conductive carrier) is preferably in the range of 0.7 or more and 3.0 or less, and more preferably in the range of 0.8 or more and 1.5 or less. When the mass ratio F2/C2 is 0.7 or more, the anode-side electrode catalyst layer 12A has a large thickness, and can hold a large amount of water. In this case, water generated in the cathode-side electrode catalyst layer 12C is more likely to undergo diffusion in the anode-side electrode catalyst layer 12A, thus allowing the fuel cell to have higher output. Furthermore, the anode-side electrode catalyst layer 12A has higher mechanical strength; thus, the membrane electrode assembly 10 may have higher mechanical strength, achieving higher durability. On the other hand, when the mass ratio F2/C2 is 3.0 or less, the anode-side electrode catalyst layer 12A does not have an excessively large thickness and is prevented from having lower proton conductivity, thus preventing lower output. When the anode-side electrode catalyst layer 12A is pressed to cause the anode-side electrode catalyst layer 12A to have a smaller thickness, the anode-side electrode catalyst layer has a higher density, and this may lead to lower mass transfer properties of the anode-side electrode catalyst layer, causing the fuel cell to have lower output.

The second fibrous material 24A is preferably carbon fibers or high molecular-weight polymer fibers.

When the second fibrous material 24A is carbon fibers, high conductivity of the carbon fibers may enable the anode-side electrode catalyst layer 12A to have lower electron transfer resistance, allowing the fuel cell to have higher output. Furthermore, carbon fibers have a low mass density, thus enabling the membrane electrode assembly 10 to have higher mechanical strength while preventing the membrane electrode assembly 10 from having a larger mass.

When the fibrous materials 24 are high molecular-weight polymer fibers containing a nitrogen atom, the polymer electrolyte 23 is more likely to be adsorbed on surfaces of the fibrous materials 24; thus, protons are more likely to be conducted on the surfaces of the fibrous materials 24. This allows the fuel cell to have higher output.

A ratio (T2/T1) of an average thickness T2 of the anode-side electrode catalyst layer 12A to an average thickness T1 of the cathode-side electrode catalyst layer 12C is preferably 1.0 or more and 2.0 or less. The average thicknesses T1 and T2 of the electrode catalyst layers 12 can be adjusted, for example, by pressing the electrode catalyst layers 12 at an appropriate pressure. When the ratio T2/T1 is 1.0 or more, the anode-side electrode catalyst layer 12A has a larger thickness than the cathode-side electrode catalyst layer 12C, and can hold a larger volume of water. In this case, water generated in the cathode-side electrode catalyst layer 12C is more likely to undergo diffusion in the anode-side electrode catalyst layer 12A, and the cathode-side electrode catalyst layer 12C may have lower gas diffusion resistance. This may allow the fuel cell to have higher output. If the ratio T2/T1 is less than 1.0 time, diffusion may be inhibited, causing lower output.

On the other hand, if the ratio T2/T1 is more than 2.0 times, an excessively small thickness T1 of the cathode-side electrode catalyst layer 12C may cause the membrane electrode assembly 10 to have lower mechanical strength. This may lead to breakage of the membrane electrode assembly 10 from the cathode side of the polymer electrolyte membrane 11, causing the fuel cell not to function.

The densities of the electrode catalyst layers 12 are preferably in the range of 1000 mg/cm³ or more and 5000 mg/cm³ or less, and more preferably in the range of 1500 mg/cm³ or more and 4000 mg/cm³ or less. When the densities of the electrode catalyst layers 12 are 1000 mg/cm³ or more, the electrode catalyst layers 12 are prevented from having an excessively small amount of catalyst per unit volume, thus preventing the fuel cell from having lower output. Furthermore, when the densities of the electrode catalyst layers 12 are 1000 mg/cm³ or more, the distance between the polymer electrolytes 23 and the fibrous materials 24 is prevented from increasing, and this prevents the electrode catalyst layers 12 from being easily broken, thus preventing the electrode catalyst layers 12 from having lower durability. When the densities are 5000 mg/cm³ or less, the electrode catalyst layers 12 are prevented from having a dense internal structure, and this prevents lower drainage performance and lower gas diffusion properties, thus preventing output reduction during high output. Furthermore, the electrode catalyst layers 12 are prevented from having lower mechanical strength.

### [Polymer electrolyte fuel cell]

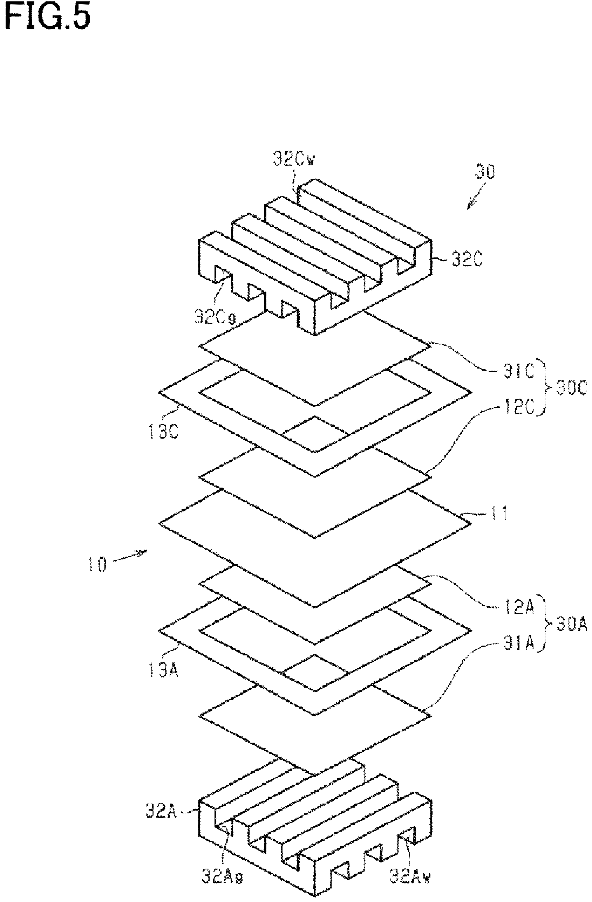

A structure of a polymer electrolyte fuel cell including a membrane electrode assembly will be described with reference to Fig. 5. The structure described below is an example of the structure of the polymer electrolyte fuel cell. Fig. 5 shows a structure of a single cell of the polymer electrolyte fuel cell. The polymer electrolyte fuel cell may have a structure in which a plurality of single cells are laminated together.

As shown in Fig. 5, the polymer electrolyte fuel cell 30 includes the membrane electrode assembly 10, a pair of gas diffusion layers, and a pair of separators. The pair of gas diffusion layers are composed of a cathode-side gas diffusion layer 31C and an anode-side gas diffusion layer 31A. The pair of separators are composed of a cathode-side separator 32C and an anode-side separator 32A.

The cathode-side gas diffusion layer 31C is in contact with the cathode-side electrode catalyst layer 12C. The cathode-side electrode catalyst layer 12C and the cathode-side gas diffusion layer 31C constitute an air electrode (cathode) 30C. The anode-side gas diffusion layer 31A is in contact with the anode-side electrode catalyst layer 12A. The anode-side electrode catalyst layer 12A and the anode-side gas diffusion layer 31A constitute a fuel electrode (anode) 30A.

A surface of the polymer electrolyte membrane 11 to which the cathode-side electrode catalyst layer 12C is joined is a cathode surface, and a surface of the polymer electrolyte membrane 11 to which the anode-side electrode catalyst layer 12A is joined is an anode surface. A portion of the cathode surface that is not covered with the cathode-side electrode catalyst layer 12C is an outer peripheral portion. A cathode-side gasket 13C is located at the outer peripheral portion of the cathode surface. A portion of the anode surface that is not covered with the anode-side electrode catalyst layer 12A is an outer peripheral portion. An anode-side gasket 13A is located at the outer peripheral portion of the anode surface. The cathode-side gasket 13C and the anode-side gasket 13A prevent gas leakage from the outer peripheral portions of the surfaces.

A multilayer composed of the membrane electrode assembly 10 and the two gas diffusion layers 31C and 31A is sandwiched between the cathode-side separator 32C and the anode-side separator 32A in the thickness direction of the polymer electrolyte fuel cell 30. The cathode-side separator 32C faces the cathode-side gas diffusion layer 31C. The anode-side separator 32A faces the anode-side gas diffusion layer 31A.

Each of a pair of surfaces of the cathode-side separator 32C facing each other has a plurality of grooves. The grooves on one of the pair of surfaces that faces the cathode-side gas diffusion layer 31C are gas flow paths 32Cg. The grooves on the other of the pair of surfaces that is opposite to the above surface are cooling water flow paths 32Cw. Each of a pair of surfaces of the anode-side separator 32A facing each other has a plurality of grooves. The grooves on one of the pair of surfaces that faces the anode-side gas diffusion layer 31A are gas flow paths 32Ag. The grooves on the other of the pair of surfaces that is opposite to the above surface are cooling water flow paths 32Aw. Each of the separators 32C and 32A is made of a material having conductivity and low gas permeability.

In the polymer electrolyte fuel cell 30, oxidant gas is supplied to the air electrode 30C through the gas flow paths 32Cg of the cathode-side separator 32C. Fuel gas is supplied to the fuel electrode 30A through the gas flow paths 32Ag of the anode-side separator 32A. Thus, the polymer electrolyte fuel cell 30 generates power. The oxidant gas may be, for example, air, oxygen gas, or the like. The fuel gas may be, for example, hydrogen gas.

### (Method of producing catalyst layers)

The electrode catalyst layers 12 can be produced by preparing a catalyst slurry, and applying the prepared catalyst slurry to a substrate, the polymer electrolyte membrane 11, or the like, followed by drying.

The catalyst slurry contains the catalyst 21, the conductive carrier 22, the polymer electrolyte 23, the fibrous material 24, and a solvent. The solvent is not specifically limited, but is preferably a solvent in which the polymer electrolytes 23 can be dispersed or dissolved. Examples of solvents typically used include water; alcohols such as methanol, ethanol, 1-propanol, 2-propanol, 1-butanol, 2-butanol, isobutyl alcohol, and tert-butyl alcohol; ketones such as acetone, methyl ethyl ketone, methyl propyl ketone, methyl butyl ketone, methyl isobutyl ketone, methyl amyl ketone, pentanone, heptanone, cyclohexanone, methylcyclohexanone, acetonyl acetone, diethyl ketone, dipropyl ketone, diisobutyl ketone, and diacetone alcohol; ethers such as tetrahydrofuran, tetrahydropyran, dioxane, diethylene glycol dimethyl ether, anisole, methoxytoluene, diethyl ether, dipropyl ether, and dibutyl ether; amines such as isopropylamine, butylamine, isobutylamine, cyclohexylamine, diethylamine, and aniline; esters such as propyl formate, isobutyl formate, amyl formate, methyl acetate, ethyl acetate, propyl acetate, butyl acetate, isobutyl acetate, pentyl acetate, isopentyl acetate, methyl propionate, ethyl propionate, and butyl propionate; acetic acid; propionic acid; dimethylformamide; dimethylacetamide; and N-methylpyrrolidone. Examples of glycol and glycol ether solvents include ethylene glycol, diethylene glycol, propylene glycol, ethylene glycol monomethyl ether, ethylene glycol dimethyl ether, ethylene glycol diethyl ether, 1-methoxy-2-propanol, and 1-ethoxy-2-propanol.

The solid content concentration of the catalyst slurry is preferably in the range of 4 mass% or more and 20 mass% or less, and more preferably in the range of 5 mass% or more and 15 mass% or less. If the concentration is excessively low, that is, the concentration is less than 4 mass%, low viscosity of the slurry may hinder application of a uniform amount of slurry, and if the concentration is excessively high, that is, the concentration exceeds 20 mass%, high viscosity of the slurry may cause the catalyst layer formed by applying the slurry to have a poor appearance.

Examples of the method of applying the catalyst slurry include, but are not specifically limited to, doctor blading, die coating, dipping, screen printing, laminator roll coating, and spraying.

Examples of the method of drying the catalyst slurry include hot air drying and IR drying. The drying temperature is preferably in the range of 40°C or more and 200°C or less, and more preferably in the range of 40°C or more and 120°C or less. If the drying temperature is excessively low, the solvent may not be evaporated, and if the drying temperature is excessively high, the catalyst layer slurry may be ignited.

The drying time of the catalyst slurry is preferably in the range of 0.5 minutes or more and 1 hour or less, and more preferably in the range of 1 minute or more and 30 minutes or less. An excessively short drying time may cause residual solvent to remain, and an excessively long drying time may cause deformation due to drying of the polymer electrolyte membrane 11.

### [Method of producing membrane electrode assembly]

The membrane electrode assembly 10 may be produced, for example, by forming the electrode catalyst layers 12 on a transfer substrate or a gas diffusion layer, and then joining the electrode catalyst layers 12 to the polymer electrolyte membrane 11 by thermocompression bonding. Alternatively, the electrode catalyst layers may be formed directly on the polymer electrolyte membrane 11. In the method in which the electrode catalyst layers 12 are formed directly on the polymer electrolyte membrane 11, adhesion between the polymer electrolyte membrane 11 and the electrode catalyst layers 12 is high; thus, the electrode catalyst layers 12 are not crushed by thermocompression bonding. From these viewpoints, the method in which the electrode catalyst layers 12 are formed directly on the polymer electrolyte membrane 11 is more preferable than the method in which the electrode catalyst layers 12 are joined to the polymer electrolyte membrane 11.

### [Calculation of density]

The density is obtained from the mass and thickness of the electrode catalyst layers 12. The mass of the electrode catalyst layers 12 is obtained from the amount of applied catalyst slurry or from the dry mass. When the mass of the electrode catalyst layers 12 is obtained from the amount of applied catalyst slurry, the solid content (mass%) of the catalyst slurry is obtained in advance, and the mass of the electrode catalyst layers 12 is obtained from a predetermined amount of applied catalyst slurry and the solid content mass. When the mass of the electrode catalyst layers 12 is obtained from the dry mass, the electrode catalyst layers 12 are processed into a piece of a predetermined size, and the mass of the piece is measured. The thickness of the electrode catalyst layers 12 is obtained by observing a cross section of the electrode catalyst layers 12 using a scanning electron microscope (Sigma 500, manufactured by Carl Zeiss Microscopy GmbH), and measuring thicknesses in the cross section, and calculating the average thickness.

### [Examples]

Examples will be described with reference to Table 2.

### [Example 1]

First, 100 mg of platinum supporting carbon (TEC10E30E, manufactured by Tanaka Kikinzoku Kogyo K.K.) and 154 mg of high molecular-weight polymer fibers (fiber diameter: 300 nm × fiber length: 10 µm) containing a nitrogen atom were placed in a container. Next, 1.5 g of water was added to the container and mixed, and then a dispersion liquid (manufactured by FUJIFILM Wako Pure Chemical Corporation) containing 1.5 g of 1-propanol and 70 mg of polymer electrolyte (Nafion (registered trademark)) was added to the container and stirred. Thus, a first catalyst slurry was obtained.

Then, 100 mg of platinum supporting carbon (TEC10E30E) and 245 mg of carbon fibers (VGCF-H, manufactured by Showa Denko K.K.) were placed in a container. Next, 1.5 g of water was added to the container and mixed, and then a dispersion liquid containing 1.5 g of 1-propanol and 245 mg of polymer electrolyte (Nafion (registered trademark)) was added to the container and stirred. Thus, a second catalyst slurry was obtained. In the platinum-supporting carbon used in the present examples, 7 g of carbon was contained in 10 g of platinum-supporting carbon.

The first catalyst slurry was applied to one surface of a polymer electrolyte membrane by die coating, followed by drying, thereby obtaining a polymer electrolyte membrane including a catalyst layer. The second catalyst slurry was applied, by die coating, to a surface of the polymer electrolyte membrane including the catalyst layer opposite to the surface to which the first catalyst slurry was applied, followed by drying. The obtained membrane electrode assembly was pressed at an appropriate pressure so that a first electrode catalyst layer had a thickness of 10 µm and a second electrode catalyst layer had a thickness of 10 µm, thereby obtaining a membrane electrode assembly of Example 1.

### [Example 2]

A membrane electrode assembly of Example 2 was obtained in the same manner as in Example 1 except that the amount of high molecular-weight polymer fibers containing a nitrogen atom added to the first catalyst slurry was 2.1 mg and the amount of carbon fibers added to the second catalyst slurry was 42 mg.

### [Example 3]

A membrane electrode assembly of Example 3 was obtained in the same manner as in Example 1 except that the amount of high molecular-weight polymer fibers containing a nitrogen atom added to the first catalyst slurry was 19.6 mg and instead of the carbon fibers, 42 mg of high molecular-weight polymer fibers containing a nitrogen atom were added to the second catalyst slurry.

### [Example 4]

A membrane electrode assembly of Example 4 was obtained in the same manner as in Example 1 except that the amount of high molecular-weight polymer fibers containing a nitrogen atom added to the first catalyst slurry was 3.5 mg and the amount of carbon fibers added to the second catalyst slurry was 42 mg.

### [Example 5]

A membrane electrode assembly of Example 5 was obtained in the same manner as in Example 1 except that the amount of high molecular-weight polymer fibers containing a nitrogen atom added to the first catalyst slurry was 17.5 mg and the amount of carbon fibers added to the second catalyst slurry was 217 mg.

### [Example 6]

A membrane electrode assembly of Example 2 was obtained in the same manner as in Example 1 except that the amount of high molecular-weight polymer fibers containing a nitrogen atom added to the first catalyst slurry was 2.1 mg and the amount of carbon fibers added to the second catalyst slurry was 42 mg.

### [Example 7]

A membrane electrode assembly of Example 7 was obtained in the same manner as in Example 1 except that the amount of high molecular-weight polymer fibers containing a nitrogen atom added to the first catalyst slurry was 70 mg and the amount of carbon fibers added to the second catalyst slurry was 210 mg.

### [Example 8]

A membrane electrode assembly of Example 4 was obtained in the same manner as in Example 1 except that the amount of high molecular-weight polymer fibers containing a nitrogen atom added to the first catalyst slurry was 3.5 mg and the amount of carbon fibers added to the second catalyst slurry was 42 mg.

### [Example 9]

A membrane electrode assembly of Example 9 was obtained in the same manner as in Example 1 except that the amount of high molecular-weight polymer fibers containing a nitrogen atom added to the first catalyst slurry was 7 mg and the amount of carbon fibers added to the second catalyst slurry was 70 mg.

### [Example 10]

A membrane electrode assembly of Example 10 was obtained in the same manner as in Example 1 except that the amount of high molecular-weight polymer fibers containing a nitrogen atom added to the first catalyst slurry was 14 mg and the amount of carbon fibers added to the second catalyst slurry was 196 mg.

### [Example 11]

A membrane electrode assembly of Example 11 was obtained in the same manner as in Example 1 except that the amount of high molecular-weight polymer fibers containing a nitrogen atom added to the first catalyst slurry was 17.5 mg and the amount of carbon fibers added to the second catalyst slurry was 245 mg and that the first electrode catalyst layer had a thickness of 7 µm and the second electrode catalyst layer had a thickness of 13 µm.

### [Example 12]

A membrane electrode assembly of Example 12 was obtained in the same manner as in Example 1 except that the amount of high molecular-weight polymer fibers containing a nitrogen atom added to the first catalyst slurry was 70 mg and the amount of carbon fibers added to the second catalyst slurry was 105 mg and that the first electrode catalyst layer had a thickness of 10 µm and the second electrode catalyst layer had a thickness of 12 µm.

### [Example 13]

A membrane electrode assembly of Example 13 was obtained in the same manner as in Example 1 except that the amount of high molecular-weight polymer fibers containing a nitrogen atom added to the first catalyst slurry was 17.5 mg and the amount of carbon fibers added to the second catalyst slurry was 245 mg and that the first electrode catalyst layer had a thickness of 6 µm and the second electrode catalyst layer had a thickness of 13 µm.

### [Example 14]

A membrane electrode assembly of Example 14 was obtained in the same manner as in Example 1 except that the amount of high molecular-weight polymer fibers containing a nitrogen atom added to the first catalyst slurry was 70 mg and the amount of carbon fibers added to the second catalyst slurry was 105 mg and that the first electrode catalyst layer had a thickness of 10 µm and the second electrode catalyst layer had a thickness of 8 µm.

### [Comparative Example 1]

A membrane electrode assembly of Comparative Example 1 was obtained in the same manner as in Example 1 except that instead of the high molecular-weight polymer fibers containing a nitrogen atom, 35 mg of carbon fibers were added to the first catalyst slurry and the amount of carbon fibers added to the second catalyst slurry was 70 mg.

### [Comparative Example 2]

A membrane electrode assembly of Comparative Example 2 was obtained in the same manner as in Comparative Example 1 except that the amount of carbon fibers added to the first catalyst slurry was 70 mg.

### [Comparative Example 3]

A membrane electrode assembly of Comparative Example 3 was obtained in the same manner as in Example 1 except that the amount of high molecular-weight polymer fibers containing a nitrogen atom added to the first catalyst slurry was 3.5 mg and the amount of carbon fibers added to the second catalyst slurry was 182 mg.

### [Comparative Example 4]

A membrane electrode assembly of Comparative Example 4 was obtained in the same manner as in Example 1 except that the amount of high molecular-weight polymer fibers containing a nitrogen atom added to the first catalyst slurry was 7 mg and the amount of carbon fibers added to the second catalyst slurry was 9.8 mg.

### [Comparative Example 5]

A membrane electrode assembly of Comparative Example 5 was obtained in the same manner as in Comparative Example 1 except that no fibrous material was added to the first catalyst slurry and instead of the carbon fibers, 70 mg of high molecular-weight polymer fibers containing a nitrogen atom were added to the second catalyst slurry.

### [Comparative Example 6]

A membrane electrode assembly of Comparative Example 6 was obtained in the same manner as in Comparative Example 4 except that the amount of high molecular-weight polymer fibers containing a nitrogen atom added to the first catalyst slurry was 7 mg and no fibrous material was added to the second catalyst slurry.

### [Evaluation method]

### [Output]

The power generation performance of fuel cells including the membrane electrode assemblies of the examples and fuel cells including the membrane electrode assemblies of the comparative examples was evaluated using a commercially available JARI standard cell. The power generation performance was evaluated according to the protocol (Cell Evaluation Analysis Protocol, December 2012) defined by New Energy and Industrial Technology Development Organization. At this time, the cell temperature was set to 80°C. Furthermore, hydrogen at a relative humidity of 88% RH was supplied to the anode, and air at a relative humidity of 42% RH was supplied to the cathode.

### [Durability]

The durability of fuel cells including the membrane electrode assemblies of the examples and fuel cells including the membrane electrode assemblies of the comparative examples was evaluated in a humidity cycle test using a commercially available JARI standard cell. The durability was evaluated according to the protocol (the same as above) defined by New Energy and Industrial Technology Development Organization. At this time, the cell temperature was set to 80°C, and nitrogen was supplied to the anode and the cathode. Furthermore, the fuel cells were held for 2 minutes in a state in which nitrogen gas at a relative humidity of 150% RH was supplied, and held for 2 minutes in a state in which nitrogen gas at a relative humidity of 0% RH was supplied. Then, a cycle of the state in which nitrogen at a relative humidity of 150% RH was supplied and the state in which nitrogen gas at a relative humidity of 0% RH was supplied was repeated.

In the evaluation of "output", the fuel cells were evaluated based on the output at a current of 1.0 A/cm², and a fuel cell with an output of 0.60 W or more was determined as good. A fuel cell with an output of less than 0.60 W has no practical problem.

In the evaluation of "durability", a hydrogen leakage current density was measured every 1000 cycles, and the fuel cells were evaluated based on the number of cycles required for the hydrogen leakage current density to reach 10 times or more the hydrogen leakage current density at 0 cycles, and 50,000 cycles or more was determined as good. For a fuel cell in which the hydrogen leakage current density did not reach 10 times or more the hydrogen leakage current density at 0 cycles by 100,000 cycles, the result was determined to be 100,000 cycles. A fuel cell with less than 50,000 cycles has no practical problem.

A membrane electrode assembly having both good "output" and good "durability" is considered as an achievement of the present invention.

In Table 2, "NF" indicates high molecular-weight polymer fibers containing a nitrogen atom, and "CF" indicates carbon fibers.

**[Table 2]**

| | F1 | F2 | F1/C 1 | F2/C2 | (F2/C2) /(F1/C1) | T1 [µm] | T2 [µm] | T2/T1 | Output [W] | Durability [1000 cycles] |
|---|---|---|---|---|---|---|---|---|---|---|
| Ex. 1 | NF | CF | 2.2 | 3.5 | 1.6 | 10 | 10 | 1.0 | 0.60 | 100 |
| Ex. 2 | NF | CF | 0.03 | 0.6 | 20 | 10 | 10 | 1.0 | 0.62 | 50 |
| Ex. 3 | NF | NF | 0.28 | 0.6 | 2.1 | 10 | 10 | 1.0 | 0.61 | 80 |
| Ex. 4 | NF | CF | 0.05 | 0.6 | 12 | 10 | 10 | 1.0 | 0.65 | 80 |
| Ex. 5 | NF | CF | 0.25 | 3.1 | 12.4 | 10 | 10 | 1.0 | 0.65 | 100 |
| Ex. 6 | NF | CF | 0.04 | 0.8 | 20 | 10 | 10 | 1.0 | 0.63 | 100 |
| Ex. 7 | NF | CF | 1.0 | 3.0 | 3.0 | 10 | 10 | 1.0 | 0.61 | 100 |
| Ex. 8 | NF | CF | 0.05 | 2.5 | 50 | 10 | 10 | 1.0 | 0.67 | 100 |
| Ex. 9 | NF | CF | 0.1 | 1.0 | 10 | 10 | 10 | 1.0 | 0.67 | 100 |
| Ex. 10 | NF | CF | 0.2 | 2.8 | 14 | 10 | 10 | 1.0 | 0.67 | 100 |
| Ex. 11 | NF | CF | 0.25 | 3.5 | 14 | 7 | 13 | 1.9 | 0.67 | 100 |
| Ex. 12 | NF | CF | 1.0 | 1.5 | 1.5 | 10 | 12 | 1.2 | 0.67 | 100 |
| Ex. 13 | NF | CF | 0.25 | 3.5 | 14 | 6 | 13 | 2.2 | 0.64 | 80 |
| Ex. 14 | NF | CF | 1.0 | 1.5 | 1.5 | 10 | 8 | 0.8 | 0.63 | 100 |
| Comp. Ex. 1 | CF | CF | 0.5 | 1.0 | 2 | 10 | 10 | 1.0 | 0.59 | 60 |
| Comp. Ex. 2 | CF | CF | 1.0 | 1.0 | 1 | 10 | 10 | 1.0 | 0.56 | 80 |
| Comp. Ex. 3 | NF | CF | 0.05 | 2.6 | 52 | 10 | 10 | 1.0 | 0.57 | 100 |
| Comp. Ex. 4 | NF | CF | 0.1 | 0.14 | 1 | 10 | 10 | 1.0 | 0.55 | 20 |
| Comp. Ex. 5 | - | NF | 0 | 1.0 | - | 10 | 10 | 1.0 | 0.56 | 5 |
| Comp. Ex. 6 | NF | - | 0.1 | 0 | 0 | 10 | 10 | 1.0 | 0.58 | 5 |

As shown in Table 2, in all of Examples 1 to 14, the output and durability were good. In particular, in Examples 8 to 12, the output was 0.67 W or more, and the number of cycles measured to evaluate the durability was 100,000 cycles, which were particularly good results. The good results were obtained by optimizing the ratio (F2/C2)/(F1/C1), the ratio F1/C1, the ratio F2/C2, and the thicknesses T1 and T2 of the electrode catalyst layers.

In Example 1, both the ratios F1/C1 and F2/C2 were high, and thus the output was lower than in Examples 8 to 10. Low proton conductivity in the anode-side and cathode-side electrode catalyst layers presumably caused low output. On the other hand, in Example 2, both the ratios F1/C1 and F2/C2 were low, and thus the output and the durability were lower than in Examples 8 to 10. A small amount of fibrous material caused formation of insufficient holes in the electrode catalyst layers, and this led to low drainage performance, resulting in low output. Furthermore, a small amount of fibrous material caused the membrane electrode assembly to have low mechanical strength, leading to low durability.

In Examples 4 and 5, due to the optimized ratio F1/C1, the output was higher than in Examples 1 to 3. The appropriate balance between the amount of fibrous material and the amount of pores in the cathode-side electrode catalyst layer presumably optimized the proton conductivity and the drainage performance, leading to high output.

In Examples 6 and 7, due to the optimized ratio F2/C2, the durability tended to be higher than in Examples 1 to 5. On the other hand, the output was lower than in Examples 4 and 5. The appropriate balance between the amount of fibrous material and the amount of pores in the anode-side electrode catalyst layer presumably optimized the mechanical strength of the membrane electrode assembly, and the water retentivity, drainage performance, and proton conductivity of the anode-side electrode catalyst layer, leading to high durability while the output was maintained.

In Examples 8 to 10, both the ratios F1/C1 and F2/C2 were optimized, and thus both the output and the durability were higher than in Examples 1 to 7. The amount of fibers and the amount of pores in each of the cathode-side and anode-side electrode catalyst layers and the balance between the amount of fibers and the amount of pores in both the electrode catalyst layers were optimized; thus, presumably, the mechanical strength of the entire membrane electrode assembly, and the water retentivity, drainage performance, and proton conductivity of the electrode catalyst layers were optimized, leading to high output and durability.

In Example 11 to 14, the average thicknesses T1 and T2 of the electrode catalyst layers and the ratio T2/T1 between the average thicknesses T1 and T2 were different from those in the other examples. In Examples 11 and 12, the output and the durability were equivalent to those in Examples 8 to 10. On the other hand, in Examples 13 and 14, the output was slightly lower. In Example 13, the durability was also lower. The thicknesses T1 and T2 of the electrode catalyst layer and the ratio T2/T1 between the thicknesses T1 and T2 were optimized; thus, presumably, the diffusion of water generated during power generation from the cathode-side electrode catalyst layer to the anode-side electrode catalyst layer and the mechanical strength of the electrode catalyst layers were optimized, leading to high output and durability.

In Comparative Examples 1 and 2 in which both F1 and F2 were carbon fibers, the output was lower than in Examples 1 to 14. The fibers of both the cathode-side and anode-side electrode catalyst layers were carbon fibers; thus, presumably, the proton conductivity in the electrode catalyst layers was low, leading to low output. In addition, in Comparative Example 2, due to the ratio (F2/C2)/(F1/C1) being less than 1.5 times, the output was presumably significantly low.

In Comparative Example 3 in which the ratio (F2/C2)/(F1/C1) was more than 50 times and Comparative Example 4 in which the ratio (F2/C2)/(F1/C1) was less than 1.5 times, the output was lower than in Examples 1 to 14. In Comparative Example 3, due to the ratio (F2/C2)/(F1/C1) being more than 50 times, the anode-side electrode catalyst layer had a high density, and this presumably led to low mass transfer properties of the electrode catalyst layer, causing the fuel cell to have low output.

In Comparative Example 4, due to the ratio (F2/C2)/(F1/C1) being less than 1.5 times, the volume of water held by the anode-side electrode catalyst layer was small, and water generated in the cathode-side electrode catalyst layer was less likely to undergo diffusion in the anode-side electrode catalyst layer. Flooding presumably caused the cathode-side electrode catalyst layer to have high mass transfer resistance for gas or the like, causing the fuel cell to have low output.

In Comparative Example 5 in which the ratio F1/C1 was 0, that is, no fibrous material was added to the cathode-side electrode catalyst layer, the output and the durability were both lower than in Examples 1 to 14. This is presumably because the cathode-side electrode catalyst layer contained no fibrous material; thus, the amount of holes was small, and the catalyst layer had a low density, leading to low drainage performance. Furthermore, the cathode-side electrode catalyst layer containing no fibrous material presumably caused low mechanical strength, leading to low durability.

In Comparative Example 6 in which the ratio F2/C2 was 0, that is, no fibrous material was added to the anode-side electrode catalyst layer, the durability was lower than in Examples 1 to 14. The anode-side electrode catalyst layer containing no fibrous material presumably caused low mechanical strength, leading to low durability.

As described above, the present embodiment enables a membrane electrode assembly to have higher mechanical strength and have high output even under low humidification conditions. This achieves a membrane electrode assembly having higher mechanical strength, and thus provides a high durability and high output membrane electrode assembly that is used for a polymer electrolyte fuel cell and that maintains durability even in an operating environment with repeated wet swelling and drying shrinkage and that has high output even during operation under low humidification conditions.

### [Industrial Applicability]

The present invention is extremely suitably applicable to, for example, a polymer electrolyte fuel cell.

### [Reference Signs List]

- 10: Membrane electrode assembly
- 11: Polymer electrolyte membrane
- 11c: First surface
- 11a: Second surface
- 12A: Anode-side electrode catalyst layer (fuel electrode catalyst layer)
- 12C: Cathode-side electrode catalyst layer (air electrode catalyst layer)
- 21A: Second catalyst
- 21C: First catalyst
- 22A: Second conductive carrier
- 22C: First conductive carrier
- 23A: Second polymer electrolyte
- 23C: First polymer electrolyte
- 24A: Second fibrous material
- 24C: First fibrous material
- 30: Polymer electrolyte fuel cell
- 31A, 31C: Gas diffusion layer
- 32C: Cathode-side separator
- 32A: Anode-side separator

## Claims

1. A membrane electrode assembly comprising:
a polymer electrolyte membrane that has a first surface, and a second surface that is a surface opposite to the first surface;
an air electrode catalyst layer that is an electrode catalyst layer joined to the first surface and contains a first catalyst material, a first conductive carrier supporting the first catalyst material, a first electrolyte, and a first fibrous material; and
a fuel electrode catalyst layer that is an electrode catalyst layer joined to the second surface and contains a second catalyst material, a second conductive carrier supporting the second catalyst material, a second electrolyte, and a second fibrous material, wherein
a mass ratio of the second fibrous material in the fuel electrode catalyst layer is higher than a mass ratio of the first fibrous material in the air electrode catalyst layer.

2. The membrane electrode assembly according to claim 1, wherein the mass ratio of the second fibrous material in the fuel electrode catalyst layer is 1.2 times or more and 9.0 times or less the mass ratio of the first fibrous material in the air electrode catalyst layer.

3. The membrane electrode assembly according to claim 1 or 2, wherein a mass of the first fibrous material contained in the air electrode catalyst layer is 0.04 times or more and 1.0 time or less a mass of the first conductive carrier contained in the air electrode catalyst layer.

4. The membrane electrode assembly according to claim 1 or 2, wherein a mass of the second fibrous material contained in the fuel electrode catalyst layer is 0.5 times or more and 3.0 times or less a mass of the second conductive carrier contained in the fuel electrode catalyst layer.

5. The membrane electrode assembly according to claim 1 or 2, wherein an average fiber diameter of at least one of the first fibrous material and the second fibrous material is 10 nm or more and 400 nm or less.

6. The membrane electrode assembly according to claim 1 or 2, wherein an average fiber length of at least one of the first fibrous material and the second fibrous material is 0.7 µm or more and 30 µm or less.

7. The membrane electrode assembly according to claim 1 or 2, wherein an average thickness of the fuel electrode catalyst layer is larger than an average thickness of the air electrode catalyst layer.

8. A polymer electrolyte fuel cell comprising:
the membrane electrode assembly according to claim 1 or 2;
a pair of gas diffusion layers that sandwich the membrane electrode assembly; and
a pair of separators that sandwich the membrane electrode assembly and the pair of gas diffusion layers.

9. A membrane electrode assembly that is used for a polymer electrolyte fuel cell, the membrane electrode assembly comprising:
a polymer electrolyte membrane that has a first surface, and a second surface that is a surface opposite to the first surface;
a cathode-side electrode catalyst layer that contains a first catalyst, a first conductive carrier supporting the first catalyst, a first polymer electrolyte, a first fibrous material and is joined to the first surface; and
an anode-side electrode catalyst layer that contains a second catalyst, a second conductive carrier supporting the second catalyst, a second polymer electrolyte, and a second fibrous material and is joined to the second surface, wherein
a ratio (F2/C2)/(F1/C1) is in a range of 1.5 or more and 50.0 or less, where F1/C1 represents a ratio of a mass F1 of the first fibrous material to a mass C1 of the first conductive carrier, and F2/C2 represents a ratio of a mass F2 of the second fibrous material to a mass C2 of the second conductive carrier, and
at least one of the first fibrous material and the second fibrous material contains a nitrogen atom.

10. The membrane electrode assembly according to claim 9, wherein the ratio F1/C1 is in a range of 0.05 or more and 0.25 or less.

11. The membrane electrode assembly according to claim 9 or 10, wherein the ratio F2/C2 is in a range of 0.7 or more and 3.0 or less.

12. The membrane electrode assembly according to claim 9 or 10, wherein an average fiber diameter of at least one of the first fibrous material and the second fibrous material is in a range of 10 nm or more and 500 nm or less.

13. The membrane electrode assembly according to claim 9 or 10, wherein an average fiber length of at least one of the first fibrous material and the second fibrous material is in a range of 0.7 µm or more and 40 µm or less.

14. The membrane electrode assembly according to claim 9 or 10, wherein a ratio (T2/T1) of an average thickness T2 of the anode-side electrode catalyst layer to an average thickness T1 of the cathode-side electrode catalyst layer is 1.0 or more and 2.0 or less.

15. The membrane electrode assembly according to claim 9 or 10, wherein the nitrogen atom forms a Lewis basic group having an unshared electron pair.

16. The membrane electrode assembly according to claim 9 or 10, wherein at least one of the first fibrous material and the second fibrous material has an azole structure.

17. A polymer electrolyte fuel cell comprising:
the membrane electrode assembly according to claim 9 or 10;
a pair of gas diffusion layers that sandwich the membrane electrode assembly; and
a pair of separators that face each other and sandwich the membrane electrode assembly and the pair of gas diffusion layers.
